(19) **Europäisches Patentamt**
**European Patent Office**
**Office européen des brevets**

(11) **EP 2 175 449 A1**

(12) **EUROPEAN PATENT APPLICATION**
published in accordance with Art. 153(4) EPC

(43) Date of publication:
**14.04.2010 Bulletin 2010/15**

(51) Int Cl.:
*G11B 7/24* (2006.01)  *G11B 7/007* (2006.01)
*G11B 7/085* (2006.01)  *G11B 7/09* (2006.01)
*G11B 7/258* (2006.01)

(21) Application number: **08777970.8**

(22) Date of filing: **08.07.2008**

(86) International application number:
**PCT/JP2008/062361**

(87) International publication number:
**WO 2009/008435 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.07.2007 JP 2007182671**

(71) Applicant: **Sharp Kabushiki Kaisha Osaka-shi, Osaka 545-8522 (JP)**

(72) Inventor: **The designation of the inventor has not yet been filed**

(74) Representative: **Müller - Hoffmann & Partner Patentanwälte Innere Wiener Strasse 17 81667 München (DE)**

(54) **OPTICAL INFORMATION RECORDING MEDIUM AND OPTICAL INFORMATION RECORDING MEDIUM DRIVING APPARATUS**

(57)    An optical information recording medium (200) has a structure wherein a light transmitting layer (10), a first information recording layer (20), an intermediate layer (30), a second information recording layer (40) and a substrate (50) are laminated in this order from a reproducing beam incoming side. The first information recording layer (20) reads out information, and the second information recording layer (40) includes a region where information can be rewritten. The first information recording layer (20) has light transmitting characteristic, and the reflectance of the first information recording layer (20) at a reproducing beam wavelength is higher than 0.4% but not more than 2.2%. Thus, by the hybrid optical information recording medium, information in the medium can be reproduced even by a driving apparatus applicable to old standard optical information recording media having a small number of information recording layers, and the recording capacity can be improved by adding a reproduction-only layer (ROM layer) or an additional recording layer (R layer) to the old standard optical information recording media.

FIG. 1

EP 2 175 449 A1

**Description**

Technical Field

The present invention relates to a multi-layered optical information recording medium including two or more information recording layers, one of which has recording characteristics different from those of other layer.

Background Art

Recently, there is a request for an increase in information density in recording/ reproduction of information on/ from an optical information recording medium in order to process a great amount of information such as images. In order to deal with this request, in Patent Literature 1 disclosing an optical information recording medium from one side of which information is reproduced, there is proposed a multi-layering technique in which a plurality of information recording layers are provided separately from each other with an intermediate layer therebetween so as to increase recording capacity of the optical information recording medium by the number of the information recording layers.

In a multi-layered optical information recording medium made by the multi-layering technique, a layer other than an information recording layer positioned farthest from a reproduction-light-incident plane has a semi-transparent property (property including both light-transmitting property and light-reflecting property) with respect to a wavelength of reproduction light. Consequently, the multi-layered optical information recording medium allows reproduction light to pass through the information recording layer having a semi-transparent property and to be condensed and incident to other information recording layer, allowing reproduction of information from individual information recording layers.

In order to reproduce information from individual information recording layers of the multi-layered optical information recording medium made by the multi-layering technique, it is necessary for a driving apparatus of the multi-layered optical information recording medium to focus on individual information recording layers. As a technique for the driving apparatus to focus on individual information recording layers, Patent Literature 2 proposes a technique in which the driving apparatus focuses on individual information recording layers with use of a S-characteristic obtained by emitting reproduction light to individual information recording layers.

As a result, at present, a multi-layered information recording medium including two information recording layers is standardized and commercially available in the fields of DVDs (Digital Versatile Disc) and BD (Blu-ray Disc®).

Further, in the field of multi-layered optical information recording media, there is a request for an optical information recording medium including not only an information recording layer where information is rewritable but also an information recording layer where various contents are recorded and where information is only reproducible or an information recording layer where information is additionally recordable (hereinafter referred to as a hybrid optical information recording medium). Patent Literature 3 discloses an example of such an optical information recording medium. Hereinafter, the information recording layer where information is rewritable is referred to as a RE (Rewritable) layer, the information recording layer where information is only reproducible is referred to as a ROM (Read Only Memory) layer, and the information recording layer where information is additionally recordable is referred to as a R (Recordable) layer.

In the ROM layer, a reflective film is formed on prepits made of concavities and convexities provided according to information, so that the shape of the reflective film is fixed. Consequently, in an optical information recording medium including a ROM layer, information is recorded on a reflective film (including shape) itself. Therefore, the reflective film is referred to as an information recording layer.

[Patent Literature 1]
Japanese Patent Application Publication, Tokukai, No. 2000-207774 A (published on July 28, 2000)
[Patent Literature 2]
Japanese Patent Application Publication, Tokukaihei, No. 10-188294 A (published on July 21, 1998)
[Patent Literature 3]
Japanese Translation of PCT International Application, Tokuhyo, No. 2006-511010 A (published on March 30, 2006)

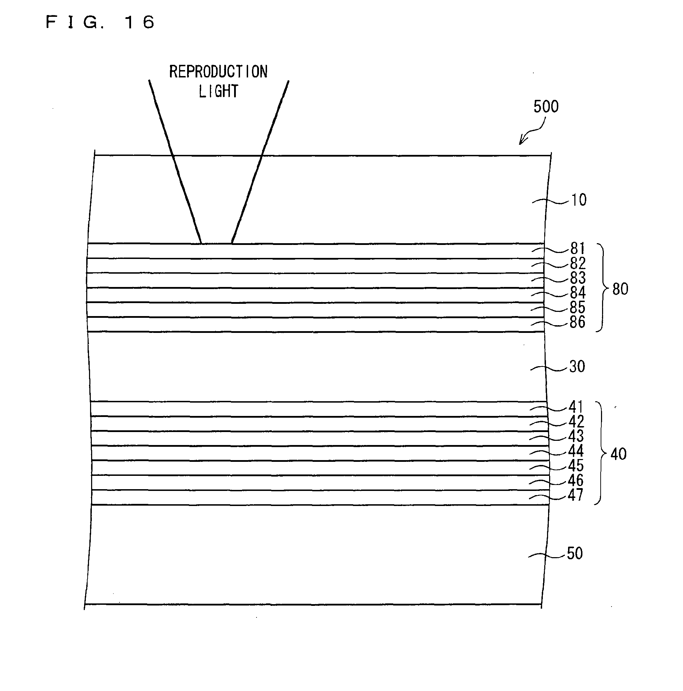

However, the increase in recording capacity by the multi-layering technique has its limit. As an example, the following explains a case of a two-layered BD 500 including a first information recording layer 80 and a second information recording layer 40 both of which are RE layers (hereinafter two-layered RE-BD 500) with reference to Fig. 16. Layers 81-86 constituting the first information recording layer 80 have the same functions as those of layers 61-66 constituting a later-mentioned third information recording layer 60, and therefore explanations of the layers 81-86 are omitted here. Further, a light-transmitting layer 10, an intermediate layer 30, the second information recording layer 40, and a substrate 50 will be explained later and therefore explanations thereof are omitted here.

The two-layered RE-BD 500 is one of the multi-layered optical information recording media explained above. Accordingly, reproduction light incident to the two-layered RE-BD 500 must pass through the first information recording layer 80 that is an information recording layer closer to a reproduction-light-incident plane. At present, the materials for recording films 83 and 43 of the individual RE layers are limited to phase change materials (such as GeSbTe and AgInSbTe). These materials are required to have a property of absorbing emitted laser light to produce heat in recording. However, this property is a cause that prevents the reproduction light from passing through the first information recording layer 80. Therefore, the two-layered RE-BD 500 is required to have higher transmittance of the reproduction light by thinning the recording film 83. In fact, the recording film 83 was thinned to approximately 6nm so as to achieve approximately 60% of transmittance with respect to a blue laser wavelength that is a reproduction light wavelength.

On the other hand, it is well known that thinning the recording film as above worsens reproduction durability. This is supposed to be because when a recording film is extremely thin, heat generated on the recording film causes thermal deterioration of the recording film before the heat is released to adjacent layers. Therefore, making the recording film thinner than as defined above would be difficult in view of reproduction durability. That is, it is impossible to increase transmittance by further thinning the recording film.

Further, the second information recording layer 40 that is an information recording layer farer from the reproduction-light-incident plane is required to have high reflectance. The reason is as follows.

Reproduction light directed to the second information recording layer 40 passes through the first information recording layer 80, focused on the second information recording layer 40, reflected there, and passes through the first information recording layer 80 again. The light having passed through the first information recording layer 80 (return light) is detected by an optical head of the driving apparatus. Thus, information is reproduced from the second information recording layer.

The return light from the second information recording layer 40 to the optical head has passed through the first information recording layer 80 twice, and transmittance of the first information recording layer 80 is approximately 60% as described above. Consequently, a ratio of light detected by the optical head to the emitted reproduction light (hereinafter return light ratio) is (reflectance of second information recording layer 40) $\times$ 60% $\times$ 60%.

As described above, the reproduction light directed to the second information recording layer 40 suffers a loss caused by the first information recording layer 80. Therefore, in order that a sufficient amount of the return light from the second information recording layer 40 is secured for the optical head (i.e. in order to allow the optical head to read information from the second information recording layer 40), it is necessary to increase reflectance of the second information recording layer 40.

On the other hand, the recording film of the RE layer is required to absorb light as described above. Accordingly, at present, the reflectance of the second information recording layer 40 is approximately 16% at most even when the reflectance is increased by preventing light from passing through the second information recording layer 40.

Further, in view of the above, if there are provided three RE layers, a return light ratio of light returning from a third information recording layer (not shown) positioned farthest from the reproduction-light-incident plane is 2.1% (= 16% $\times$ 60% $\times$ 60% $\times$ 60% $\times$ 60%). The return ratio of 2.1% hardly allows an optical head of a current optical information recording medium driving apparatus to focus on the third information recording layer, and hardly allows securing a contrast ratio of a RE layer based on presence/absence of information in the RE layer since the RE layer has a lower contrast ratio by nature than a ROM layer etc. Consequently, it is substantially impossible to increase recording capacity by providing three RE layers.

Further, in general, an optical information recording medium is standardized as seen in DVDs, BDs, etc. This standardization is substantially essential in order to allow an optical information recording medium to be used universally. However, conventionally, the standardization causes a problem that an optical information recording medium corresponding to an old standard can be read by a driving apparatus corresponding to a new standard, whereas an optical information recording medium corresponding to the new standard cannot be read by a driving apparatus corresponding to the old standard. Consequently, even if the problems of focus and a contrast ratio seen in an optical head as described above are solved, the problem that an optical information recording medium corresponding to the new standard cannot be read by a driving apparatus corresponding to the old standard still remains.

Further, a similar problem occurs in a case of increasing recording capacity by combining a ROM layer or a R layer with a RE layer as seen in Patent Literature 3. According to Patent Literature 3, the ROM layer or the R layer is made of a metal semi-light-transmitting transparent film such as Au. The reflectance of the ROM layer or the R layer is larger than that of a first information recording layer of a two-layered RE optical information recording medium such as a two-layered RE-BD. Further, since the S-characteristic depends on the amount of reflective light, large S-characteristic is detected in focusing. This raises a problem that an unknown information recording layer is detected by a driving apparatus corresponding to only an optical information recording medium that is not designed to include the ROM layer or the R layer, which may result in defective reproduction of information. That is, there is a problem that an optical information recording medium corresponding to a new standard, designed to include the ROM layer or the R layer, cannot be read by a driving apparatus corresponding to an old standard.

As described above, the technique of increasing recording capacity by multi-layering, which requires a new standard, suffers many problems.

Summary of Invention

The present invention was made in view of the foregoing problems. An object of the present invention is to provide a hybrid optical information recording medium which can be read by a driving apparatus corresponding to an old standardized optical information recording medium including less number of information recording layers, and which has increased recording capacity by including, in addition to a layer of the old standardized optical information recording medium, a reproduction-only layer (ROM layer) or an additionally recordable layer (R layer).

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

With the arrangement, the reflectance of the first information recording layer with respect to the reproduction light wavelength is 2.2% or less. Consequently, for the reason explained later, the first information recording layer does not allow focus pull-in with respect to second reproduction light for reproducing information from the rewritable layer and allows focus pull-in with respect to first reproduction light, with higher intensity than the second reproduction light, for reproducing information from the first information recording layer.

Specifically, the optical information recording medium of the present invention is designed such that the first information recording layer closest to the plane where the reproduction light is incident out of the plurality of information recording layers is a layer where information is reproducible (ROM layer) and at least one layer other than the first information recording layer out of the plurality of information recording layers is a rewritable layer including a region where information is rewritable (RE layer) and the first information recording layer has translucency. Consequently, an optical information recording medium including two RE layers, which is conventionally difficult to include three or more layers, can be arranged to additionally include a ROM layer while hardly dropping return light ratios of the two RE layers. This allows increasing recording capacity of the optical information recording medium including the RE layers. Having translucency with respect to a wavelength of reproduction light indicates having transmittance of 80% or more with respect to the reproduction light wavelength. The focus pull-in indicates a state where focus servo is ON (i.e. state where focus position of laser light emitted from an optics system follows any information recording layer).

In a conventional hybrid optical information recording medium in which recording capacity is increased by additionally providing a ROM layer serving as a first information recording layer, the first information recording layer transmits reflective light from a second information recording layer and subsequent information recording layer (referred to as other information recording layer) that are RE layers whose material results in low reflectance (reflectance of approximately 15% with respect to reproduction light wavelength of approximately 405nm). Therefore, the ROM layer made of a metal such as Ag, Al, and Au is made thin in order to have high transmittance.

However, since the ROM layer is a metal layer, even when the ROM layer is made as thin as possible provided that the metal layer is evenly formed, the ROM layer still has reflectance of approximately 8% that is higher than reflectance of 5% of a first information recording layer of a two-layered RE-BD for example. Consequently, when emitting reproduction light to the ROM layer, a S-characteristic sufficient for focus pull-in is detected from the ROM layer. Accordingly, a driving apparatus that does not correspond to the standard of the hybrid optical information recording medium is highly likely to detect the S-characteristic from the ROM layer. Consequently, it is highly likely that the driving apparatus cannot deal with the information recording layer unknown to the driving apparatus, resulting in defective reproduction.

In contrast thereto, the optical information recording medium of the present invention is designed such that the first information recording layer has translucency, and reflectance of the first information recording layer with respect to the reproduction light wavelength is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the ROM layer is not provided.

Further, the optical information recording medium of the present invention is designed such that the first information recording layer has translucency, and reflectance of the first information recording layer with respect to the reproduction light wavelength is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and can reproduce information from the first information recording layer. Consequently, the optical information recording medium of the present invention allows increasing recording capacity by recording capacity corresponding to the first information recording layer.

In particular, since an optical information recording medium including two RE layers, which is conventionally difficult to include three or more layers, can be arranged to additionally include a ROM layer, it is possible to increase recording capacity of the optical information recording medium while keeping limit value of each rewritable layer.

In a case where the optical information recording medium including two RE layers, which is conventionally difficult to include three or more layers, is arranged to additionally include a ROM layer, if the ROM layer is provided at a position different from that of the optical information recording medium of the present invention, a problem occurs. The reason is explained below.

Initially, in a case of an optical information recording medium in which a ROM layer is provided between two RE layers, it is necessary to provide the ROM layer at a position that does not cause interlayer crosstalk (noise from an information recording layer other than an information recording layer during reproduction) among three information recording layers. Consequently, providing the ROM layer broadens the distance between the two RE layers, with the result that an optical head of a driving apparatus corresponding to an old standard cannot reproduce information from such an optical information recording medium.

In general, an objective lens of an optical head is designed such that the objective lens focuses on a position with a predetermined distance from a reproduction-light-incident plane that is a surface of an optical information recording medium. In a case of a multi-layered optical information recording medium, the distances between the reproduction-light-incident plane and individual information recording layers are different. In this case, spherical aberration occurs at an information recording layer that is not positioned with an optimal distance from the reproduction-light-incident plane, resulting in adverse influence on a reproduction signal in a driving apparatus. In order to cancel the spherical aberration, the driving apparatus is equipped with a beam expander for example.

However, in order to increase the range of the beam expander, it is necessary to provide an objective lens that meets a sine condition more satisfactory. Such an objective lens requires very strict conditions of common differences such as decentering error and inclination error, and therefore the objective lens gets expensive. Consequently, an optical head gets expensive. Therefore, it is often that a driving apparatus corresponding to an old-standardized optical information recording medium with no ROM layer does not include an optical head having a beam expander capable of dealing with a case where two RE layers have a large distance therebetween. Accordingly, it is highly possible that the driving apparatus corresponding to the old standard cannot reproduce information from each of the two RE layers.

Next, in a case of an optical information recording medium in which a ROM layer is provided behind (under) two RE layers (i.e. a ROM layer is provided at a position closest to a substrate), if reflectances of the two RE layers are substantially the same as reflectances of two RE layers with no ROM layer, it is highly likely that the RE layer serving as a second information recording layer has transmittance of 0% with respect to a reproduction light wavelength (this is evident from the case of the two-layered RE-BD). It is highly likely that such an optical information recording medium does not allow reproduction light to be condensed and incident to the ROM layer.

In view of the above, it is preferable that a ROM layer to be added is provided in front of (above) two RE layers (i.e. a ROM layer is provided farthest from a substrate among a plurality of information recording layers laminated on the substrate), as in the optical information recording medium of the present invention.

Further, with the arrangement, reflectance of the first information recording layer with respect to the reproduction light wavelength is more than 0.4%. For example, in a case of BD, it is possible to reduce intensity of reproduction laser to approximately 3.5mW. Consequently, the optical information recording medium of the present invention does not suffer deterioration of a RE layer when counting the number of information recording layers for the reason mentioned later.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, and reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

With the arrangement, reflectance of the first information recording layer with respect to a wavelength of the reproduction light is such a value as to cause a S-characteristic of the first information recording layer obtained when second reproduction light for reproducing information from the rewritable layer is emitted to the first information recording layer is so smaller than a S-characteristic of the rewritable layer obtained when the second reproduction light is emitted to the rewritable layer that it is necessary to change gain of a S-characteristic detector in order to detect the S-characteristic of the first information recording layer. Consequently, when a driving apparatus that not correspond to an additional first information recording layer and that corresponds to second and subsequent information recording layers (driving apparatus corresponding to an old standard; hereinafter old-standardized driving apparatus) reproduces information from the optical information recording medium of the present invention, the old-standardized driving apparatus can hardly detect the first information recording layer.

That is, when counting the number of information recording layers of an optical information recording medium at the initial stage of reproduction, the old-standardized driving apparatus does not emit first reproduction light for reproducing information from the first information recording layer to which the old-standardized driving apparatus does not correspond. Consequently, the old-standardized driving apparatus can hardly detect the first information recording layer of the optical information recording medium of the present invention without changing gain of a S-characteristic detector to a predetermined value.

In contrast thereto, when counting the number of information recording layers of an optical information recording medium at the initial stage of reproduction, a driving apparatus also corresponding to the first information recording layer (hereinafter new-standardized driving apparatus) emits first reproduction light for reproducing information from the first information recording layer to which the new-standardized driving apparatus corresponds. Consequently, the new-standardized driving apparatus can identify the first information recording layer of the optical information recording medium of the present invention without changing gain of a S-characteristic detector to a predetermined value.

Therefore, the optical information recording medium of the present invention allows the old-standardized driving apparatus to reproduce information from the second and subsequent information recording layers without defective reproduction. Further, in a case where the optical information recording medium of the present invention is read by the new-standardized driving apparatus, the optical information recording medium allows the new-standardized driving apparatus to reproduce information from the first information recording layer, allowing an increase in recording capacity of the optical information recording medium by recording capacity corresponding to the first information recording layer.

Further, with the arrangement, reflectance of the first information recording layer with respect to the reproduction light wavelength is such a value as not to allow focus pull-in with respect to the second reproduction light for reproducing information from the rewritable layer, and is such a value as to allow focus pull-in with respect to the first reproduction light, with higher intensity than the second reproduction light, for reproducing information from the first information recording layer. The above arrangement also yields the above effect. That is, the optical information recording medium of the present invention can be read also by the old-standardized driving apparatus, and when the optical information recording medium is read by the new-standardized driving apparatus, it is possible to increase recording capacity of the optical information recording medium by recording capacity corresponding to the first information recording layer.

In a case where gain of a S-characteristic detector is not fixed when counting the number of information recording layers of an optical information recording medium in the initial stage of reproduction, a driving apparatus may be equipped with AGC for example. However, since the driving apparatus is in a state before focusing, it is difficult to obtain signal amplitude serving as a reference. Consequently, it is very difficult to detect a S-characteristic of an information recording layer properly other than by the driving apparatus having a predetermined fixed gain.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, and reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

With the arrangement, the first information recording layer has translucency, and reflectance of the first information recording layer with respect to the reproduction light wavelength is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the ROM layer is not provided.

Further, the optical information recording medium of the present invention is designed such that the first information recording layer has translucency, and reflectance of the first information recording layer with respect to the reproduction light wavelength is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and therefore can reproduce information stored on the first information recording layer. Consequently, the optical information recording medium of the present invention allows increasing recording capacity by recording capacity corresponding to the first information recording layer.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

With the arrangement, the reflectance of the first information recording layer with respect to the reproduction light wavelength is 2.2% or less. Consequently, for the reason explained later, the first information recording layer does not allow focus pull-in with respect to second reproduction light for reproducing information from the rewritable layer and allows focus pull-in with respect to first reproduction light, with higher intensity than the second reproduction light, for reproducing information from the first information recording layer.

Specifically, the optical information recording medium of the present invention is designed such that the first information recording layer closest to the plane where the reproduction light is incident out of the plurality of information recording layers is a layer where information is additionally recordable (R layer) or a layer where information is additionally recordable and information is reproducible and at least one layer other than the first information recording layer out of the plurality of information recording layers is a rewritable layer including a region where information is rewritable (RE layer) and the first information recording layer has translucency. Consequently, an optical information recording medium including two RE layers, which is conventionally difficult to include three or more layers, can be arranged to additionally include a R layer while hardly dropping return light ratios of the two RE layers. This allows increasing recording capacity of the optical information recording medium including the RE layers. Having translucency with respect to a reproduction light wavelength indicates having transmittance of 80% or more with respect to the reproduction light wavelength. The focus pull-in indicates a state where focus servo is ON (i.e. state where focus position of laser light emitted from an optics system follows any information recording layer).

In a conventional hybrid optical information recording medium in which recording capacity is increased by additionally providing a R layer serving as a first information recording layer, the first information recording layer is required to transmit reflective light from a second information recording layer and subsequent information recording layer (referred to as other information recording layer) that are RE layers whose material results in low reflectance (reflectance of approximately 15% with respect to reproduction light wavelength of approximately 405nm). Therefore, in a case where the R layer has a normal two-layered structure in which organic dye and a reflective film are combined, the R layer made of a metal such as Ag, Al, and Au is made thin in order to have high transmittance.

However, since the reflective layer is a metal layer, even when the reflective layer is made as thin as possible provided that the metal layer is evenly formed, the reflective layer still has reflectance of approximately 8% that is higher than reflectance of 5% of a first information recording layer of a two-layered RE-BD for example. Consequently, when emitting reproduction light to the R layer, a S-characteristic sufficient for focus pull-in is detected from the R layer. Accordingly, a driving apparatus that does not correspond to the standard of the hybrid optical information recording medium is highly likely to detect the S-characteristic from the R layer. Consequently, it is highly likely that the driving apparatus cannot deal with an information recording layer unknown to the driving apparatus, resulting in defective reproduction.

In contrast thereto, the optical information recording medium of the present invention is designed such that the first information recording layer has translucency, and reflectance of the first information recording layer with respect to the reproduction light wavelength is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the R layer is not provided.

Further, the optical information recording medium of the present invention is designed such that the first information recording layer has translucency, and reflectance of the first information recording layer with respect to the reproduction light wavelength is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and can reproduce information from the first information recording layer. Consequently, the optical information recording medium of the present invention allows increasing recording capacity by recording capacity corresponding to the first information recording layer.

In particular, since an optical information recording medium including two RE layers, which is conventionally difficult to include three or more layers, can be arranged to additionally include a R layer, it is possible to increase recording capacity of the optical information recording medium while keeping limit value of each rewritable layer.

In a case where the optical information recording medium including two RE layers, which is conventionally difficult to include three or more layers, is arranged to additionally include a R layer, if the R layer is provided at a position different from that of the optical information recording medium of the present invention, a problem occurs. The reason is explained below.

Initially, in a case of an optical information recording medium in which a R layer is provided between two RE layers, it is necessary to provide the R layer at a position that does not cause interlayer crosstalk (noise from an information recording layer other than an information recording layer during reproduction) among three information recording layers. Consequently, providing the R layer broadens the distance between the two RE layers, with the result that an optical head of a driving apparatus corresponding to an old standard cannot reproduce information from such an optical information recording medium.

In general, an objective lens of an optical head is designed such that the objective lens focuses on a position with a predetermined distance from a reproduction-light-incident plane that is a surface of an optical information recording medium. In a case of a multi-layered optical information recording medium, the distances between the reproduction-light-incident plane and individual information recording layers are different. In this case, spherical aberration occurs at an information recording layer that is not positioned with an optimal distance from the reproduction-light-incident plane, resulting in adverse influence on a reproduction signal in a driving apparatus. In order to cancel the spherical aberration, the driving apparatus is equipped with a beam expander for example.

However, in order to increase the range of the beam expander, it is necessary to provide an objective lens that meets a sine condition more satisfactory. Such an objective lens requires very strict conditions of common differences such as decentering error and inclination error, and therefore the objective lens gets expensive. Consequently, an optical head gets expensive. Therefore, it is often that a driving apparatus corresponding to an old-standardized optical information recording medium with no R layer does not include an optical head having a beam expander capable of dealing with a case where two RE layers have a large distance therebetween. Accordingly, it is highly possible that the driving apparatus corresponding to the old standard cannot reproduce information from each of the two RE layers.

Next, in a case of an optical information recording medium in which a R layer is provided behind two RE layers (i.e. a R layer is provided at a position closest to a substrate), if reflectances of the two RE layers are substantially the same as reflectances of two RE layers with no R layer, it is highly likely that the RE layer serving as a second information recording layer has transmittance of 0% with respect to a reproduction light wavelength (this is evident from the case of the two-layered RE-BD). It is highly likely that such an optical information recording medium does not allow reproduction light to be condensed and incident to the R layer.

In view of the above, it is preferable that a R layer to be added is provided in front of two RE layers (i.e. a R layer is provided farthest from a substrate among a plurality of information recording layers laminated on the substrate), as in the optical information recording medium of the present invention.

Further, with the arrangement, reflectance of the first information recording layer with respect to the reproduction light wavelength is more than 0.4%. For example, in a case of BD, it is possible to reduce intensity of reproduction laser to approximately 3.5mW. Consequently, the optical information recording medium of the present invention does not suffer deterioration of a RE layer when counting the number of information recording layers for the reason mentioned later.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including first information recording layer which is provided closest to a plane where the reproduction light is incident and which allows only additional recording of information or which includes a region allowing only additional recording of information and a region allowing only reproduction of information, and at least one rewritable layer including a region where information is rewritable, and reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

With the arrangement, reflectance of the first information recording layer with respect to a wavelength of the reproduction light is such a value as to cause the S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer. Consequently, when a driving apparatus that not correspond to an additional first information recording layer and that corresponds to second and subsequent information recording layers (driving apparatus corresponding to an old standard; hereinafter old-standardized driving apparatus) reproduces information from the optical information recording medium of the present invention, the old-standardized driving apparatus can hardly detect the first information recording layer.

That is, when counting the number of information recording layers of an optical information recording medium at the initial stage of reproduction, the old-standardized driving apparatus does not emit first reproduction light for reproducing information from the first information recording layer to which the old-standardized driving apparatus does not correspond. Consequently, the old-standardized driving apparatus can hardly detect the first information recording layer of the optical information recording medium of the present invention without changing gain of a S-characteristic detector to a predetermined value.

In contrast thereto, when counting the number of information recording layers of an optical information recording medium at the initial stage of reproduction, a driving apparatus also corresponding to the first information recording layer (hereinafter new-standardized driving apparatus) emits first reproduction light for reproducing information from the first information recording layer to which the new-standardized driving apparatus corresponds. Consequently, the new-standardized driving apparatus can identify the first information recording layer of the optical information recording medium of the present invention without changing gain of a S-characteristic detector to a predetermined value.

Therefore, the optical information recording medium of the present invention allows the old-standardized driving apparatus to reproduce information from the second and subsequent information recording layers without defective reproduction. Further, in a case where the optical information recording medium of the present invention is read by the new-standardized driving apparatus, the optical information recording medium allows the new-standardized driving apparatus to reproduce information from the first information recording layer, allowing an increase in recording capacity of the optical information recording medium by recording capacity corresponding to the first information recording layer.

Further, with the arrangement, reflectance of the first information recording layer with respect to the reproduction light wavelength is such a value as not to allow focus pull-in with respect to the second reproduction light for reproducing information from the rewritable layer, and is such a value as to allow focus pull-in with respect to the first reproduction light, with higher intensity than the second reproduction light, for reproducing information from the first information recording layer. The above arrangement also yields the above effect. That is, the optical information recording medium of the present invention can be read also by the old-standardized driving apparatus, and when the optical information recording medium is read by the new-standardized driving apparatus, it is possible to increase recording capacity of the optical information recording medium by recording capacity corresponding to the first information recording layer.

In a case where gain of a S-characteristic detector is not fixed when counting the number of information recording layers of an optical information recording medium in the initial stage of reproduction, a driving apparatus may be equipped with AGC for example. However, since the driving apparatus is in a state before focusing, it is difficult to obtain signal amplitude serving as a reference. Consequently, it is very difficult to detect a S-characteristic of an information recording layer properly other than by the driving apparatus having a predetermined fixed gain.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, and reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

With the arrangement, the first information recording layer has translucency, and reflectance of the first information recording layer with respect to the reproduction light wavelength is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the R layer is not provided.

Further, the optical information recording medium of the present invention is designed such that the first information recording layer has translucency, and reflectance of the first information recording layer with respect to the reproduction light wavelength is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and therefore can reproduce information stored on the first information recording layer. Consequently, the optical information recording medium of the present invention allows increasing recording capacity by recording capacity corresponding to the first information recording layer.

Further, an optical information recording medium driving apparatus of the present invention is capable of reproducing information from an optical information recording medium, the optical information recording medium including: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information or only additional recording of information or which includes a region allowing only additional recording of information and a region allowing only reproduction of information, and at least one rewritable layer including a region where information is rewritable, intensity of reproduction light for reproducing information from the first information recording layer being larger than intensity of reproduction light for reproducing information from the rewritable layer, and being small enough not to deteriorate the rewritable layer.

With the arrangement, intensity of the reproduction light for reproducing information from the first information recording layer is larger than intensity of the reproduction light for reproducing information from the rewritable layer. Consequently, the optical information recording medium driving apparatus of the present invention can surely focus on the first information recording layer of the optical information recording medium of the present invention which is also readable by the driving apparatus corresponding to the old standard, and accordingly the optical information recording medium driving apparatus can reproduce information from the first information recording layer.

Brief Description of Drawings

Fig. 1

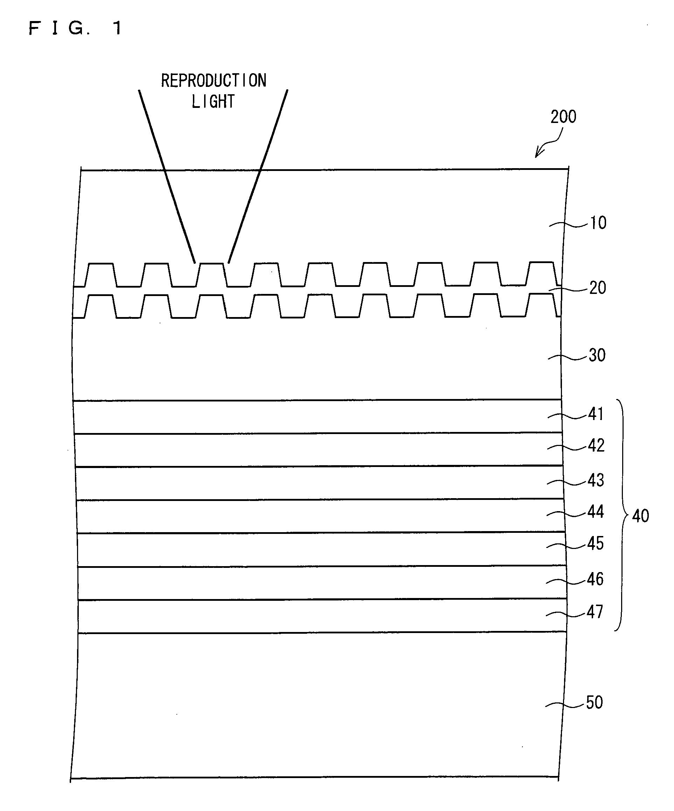

Fig. 1 is a cross sectional drawing schematically showing an example of a structure of an optical information recording medium according to Embodiment 1.
Fig. 2

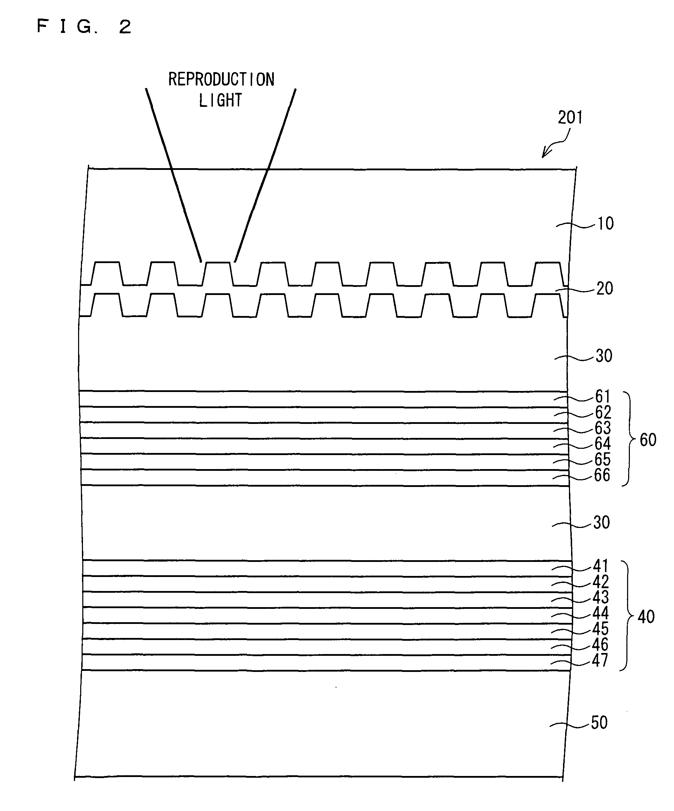

Fig. 2 is a cross sectional drawing schematically showing another example of a structure of an optical information recording medium according to Embodiment 1.
Fig. 3

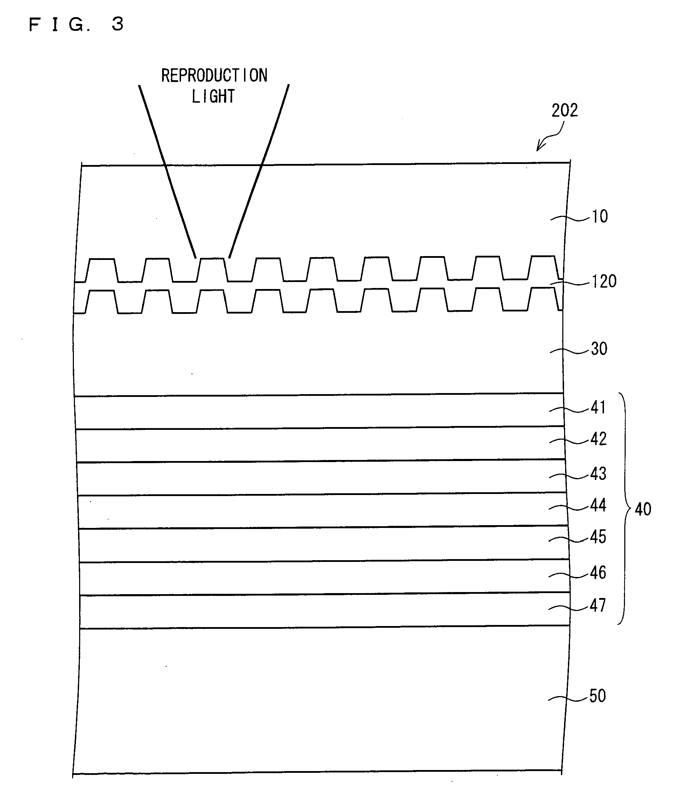

Fig. 3 is a cross sectional drawing showing Comparative Example 1 in comparison with the schematic structure of the optical information recording medium shown in Fig. 1.
Fig. 4

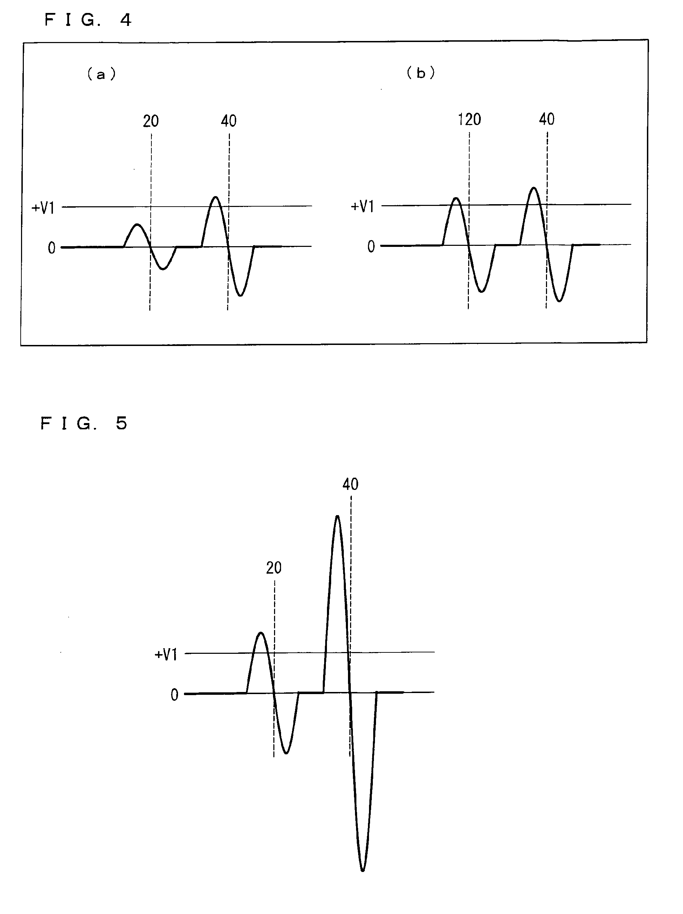

Fig. 4 shows results of measuring S-characteristics in Example 1 shown in Fig. 1 and Comparative Example shown in Fig. 3 with laser light having intensity of 0.7mW. (a) of Fig. 4 shows a S-characteristic obtained by measurement of Example 1. (b) of Fig. 4 shows a S-characteristic obtained by measurement of Comparative Example 1.
Fig. 5
Fig. 5 shows a result of measuring a S-characteristic in Example 1 shown in Fig. 1 with laser light having intensity of 1.0mW.
Fig. 6

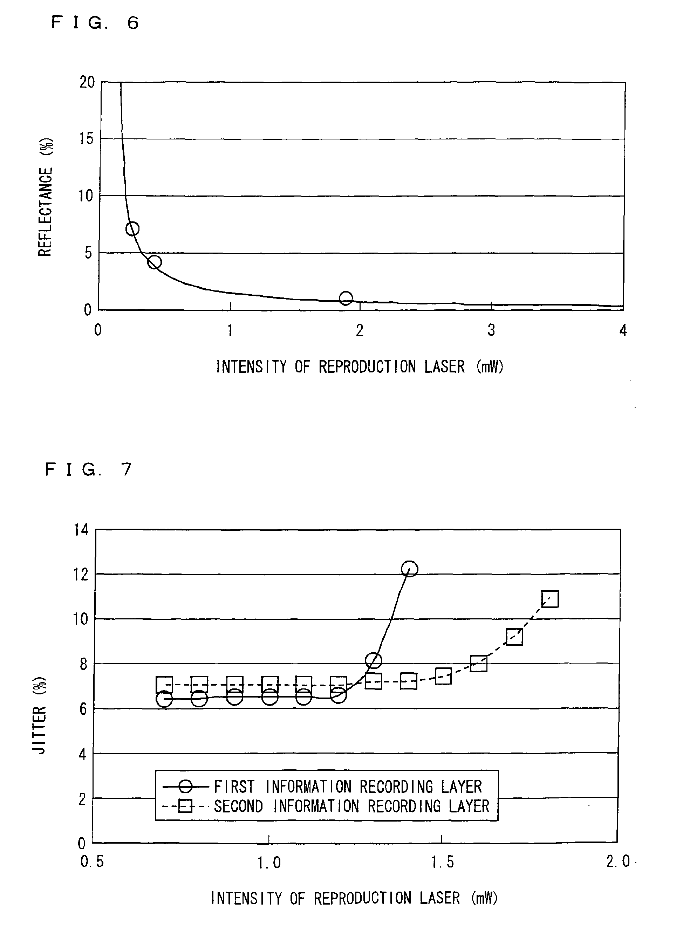

Fig. 6 is a drawing showing that upper limits of reflectance of an information recording layer that does not allow focusing depend on intensity of reproduction laser light.
Fig. 7
Fig. 7 is a drawing showing that jitter in an optical information recording medium having a two-layered (RE) structure depends on intensity of reproduction laser light.
Fig. 8

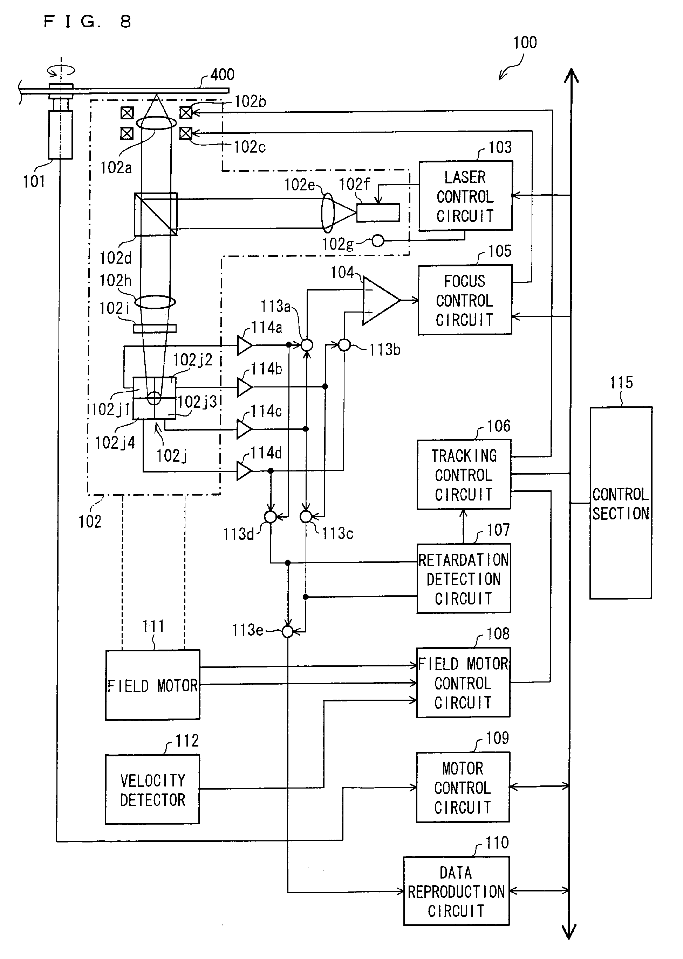

Fig. 8 is an explanatory drawing showing an example of a reproduction system for reproducing information from a conventional multi-layered optical information recording medium.
Fig. 9

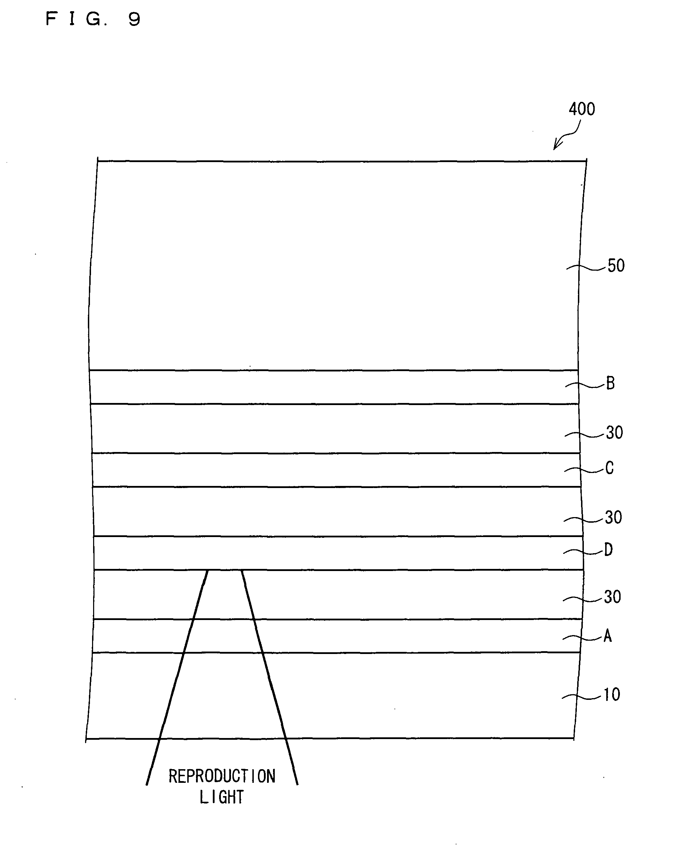

Fig. 9 is a cross sectional drawing showing a conventional multi-layered optical information recording medium having a four-layered structure.
Fig. 10

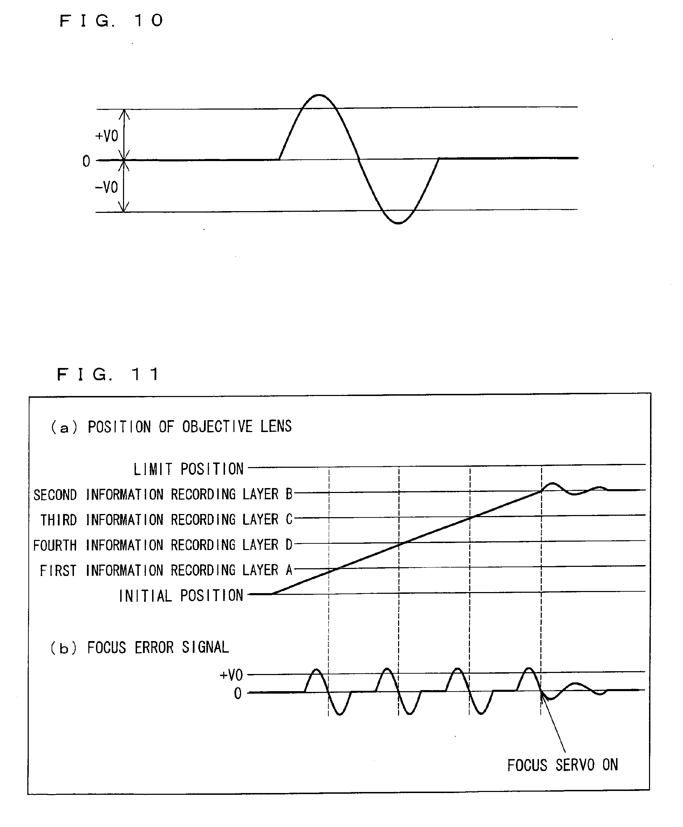

Fig. 10 is an explanatory drawing showing a S-characteristic seen in the reproduction system in Fig. 8.
Fig. 11
Fig. 11 is a drawing showing transition of the position of an objective lens and a focus error signal when the reproduction system shown in Fig. 8 carries out a focus searching process on the second information recording layer shown in Fig. 9. (a) of Fig. 11 shows transition of the position of the objective lens. (b) of Fig. 11 shows the focus error signal.
Fig. 12

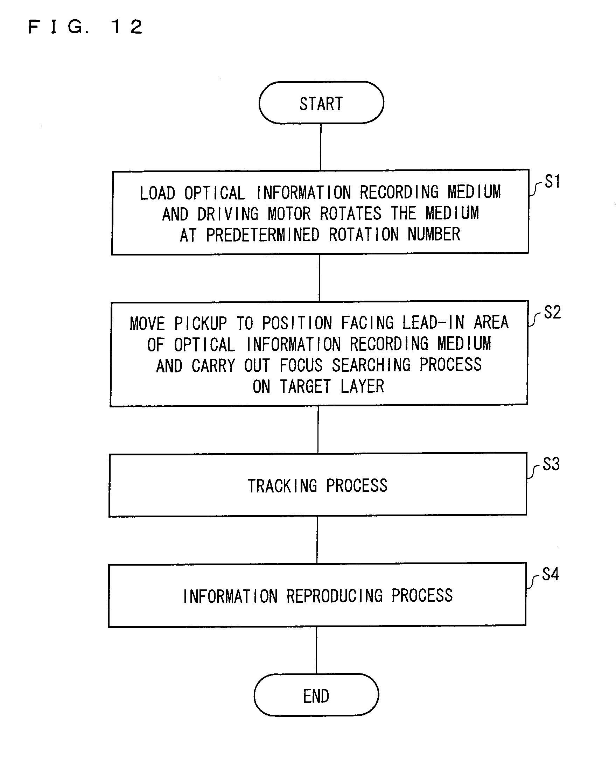

Fig. 12 is a flowchart showing the flow of a process carried out by the reproduction system shown in Fig. 8.
Fig. 13

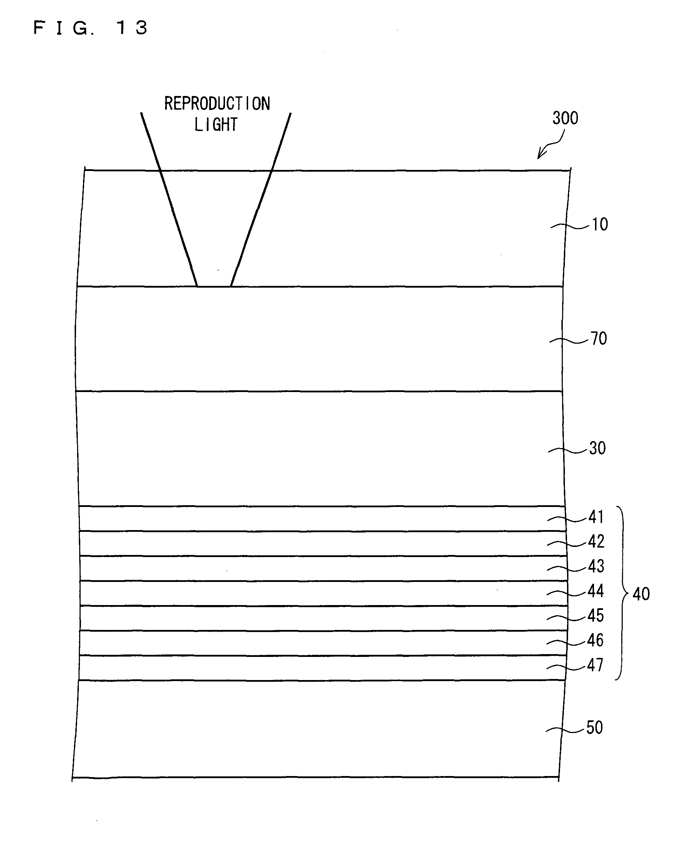

Fig. 13 is a cross sectional drawing schematically showing an example of a structure of an optical information recording medium according to Embodiment 2.
Fig. 14

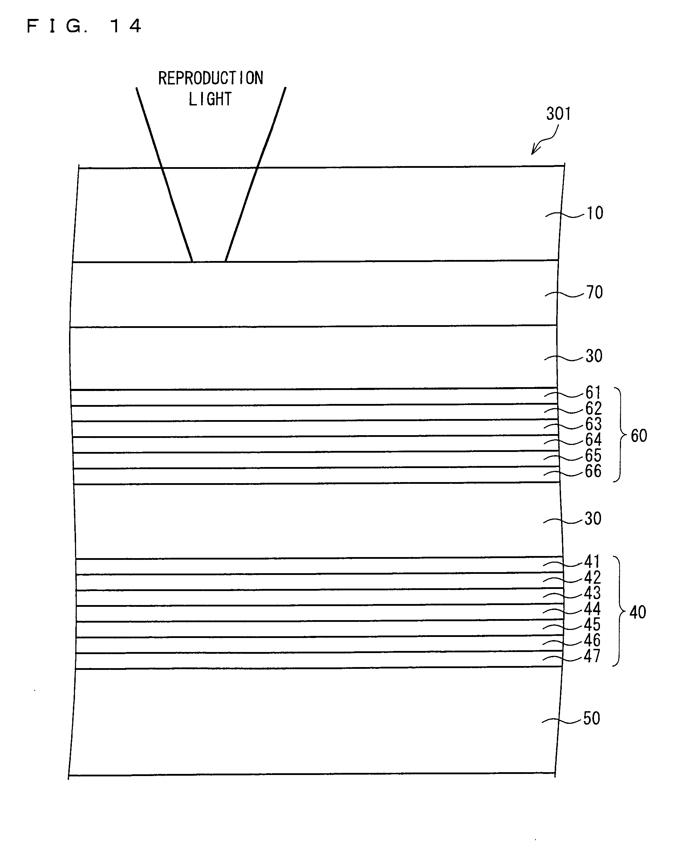

Fig. 14 is a cross sectional drawing schematically showing another example of a structure of the optical information recording medium according to Embodiment 2.
Fig. 15

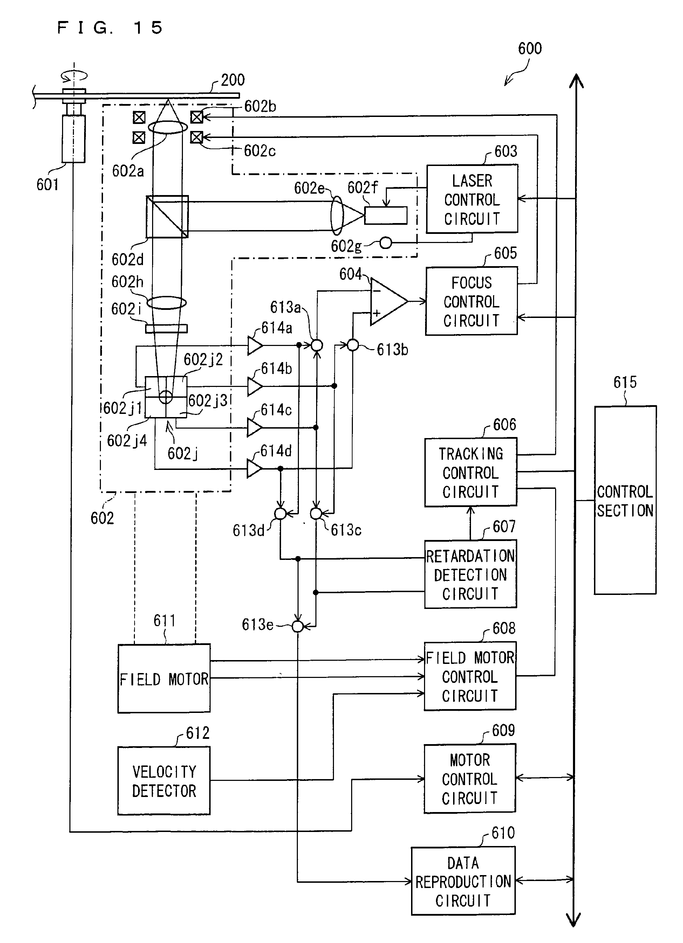

Fig. 15 is an explanatory drawing showing an example of a reproduction system for reproducing information from a multi-layered optical information recording medium according to Embodiment 3 of the present invention.
Fig. 16
Fig. 16 is a cross sectional drawing showing an example of a conventional multi-layered optical information recording medium having a two-layered structure.

Reference Signs List

10: Light-transmitting layer
20, 70: First information recording layer (first information recording layer, information recording layer)
30: Intermediate layer
40, 60: Second information recording layer (rewritable layer, information recording layer)
50: Substrate
200, 201, 300, 301: Optical information recording medium
600: Reproduction system (optical information recording medium driving apparatus)

Description of Embodiments

[Embodiment 1]

The following explains Embodiment 1 of the present invention with reference to Figs. 1-12.
As shown in Fig. 1, an optical information recording medium 200 that is one example of Embodiment 1 includes a light-transmitting layer 10, a first information recording layer (first information recording layer, information recording layer) 20, an intermediate layer 30, a second information recording layer (rewritable layer, information recording layer) 40, and a substrate 50 that are laminated in this order from a reproduction-light-incoming side. Fig. 1 is a cross sectional drawing schematically showing an example of a structure of the optical information recording medium 200 according to Embodiment 1.

The light-transmitting layer 10 is made of ultraviolet curing resin of $75\mu m$ in thickness for example. The material of the light-transmitting layer 10 is not limited as long as the material has high transmittance with respect to a wavelength of reproduction light. That is, the light-transmitting layer 10 may be made of a polycarbonate film and a transparent adhesive. Further, the light-transmitting layer 10 may be provided on its surface with a hard coat for protecting the surface. Further, the thickness of the light-transmitting layer 10 may be changed depending on an optics system of a reproduction apparatus (driving apparatus) for the optical information recording medium 200. Specifically, the light-transmitting layer 10 may be made of a polycarbonate substrate of 0.6mm in thickness.

The first information recording layer 20 is a ROM layer made of aluminum nitride of 15nm in thickness, whose refractive index is adjusted by a flow rate of nitrogen when the layer is formed. The thickness and the material of the first information recording layer 20 are not limited to these, and may be other thickness and other material as long as the thickness and the material allow reflectance of the first information recording layer 20 with respect to a reproduction light wavelength to be more than 0.4% and not more than 2.2% for example. That is, the first information recording layer 20 should be designed such that the first information recording layer 20 has translucency with respect to the reproduction light wavelength and the reflectance thereof is such a value as not to allow focus pull-in with respect to second reproduction light for reproducing information from the rewritable layer (second information recording layer 40) and to allow focus pull-in with respect to first reproduction light for reproducing information from the first information recording layer 20. Specifically, the first information recording layer 20 may be a dielectric body made of silicon nitride or mainly made of aluminum nitride or silicon nitride, and may have a multi-layered structure.

The second reproduction light is emitted to the optical information recording medium 200 when reproducing information from the RE layer such as the second information recording layer 40, and can be emitted by a driving apparatus corresponding to an old standardized optical information recording medium as well as by a driving apparatus corresponding to a new standardized optical information recording medium. The first reproduction light has higher intensity than the second reproduction light, and is emitted to the optical information recording medium 200 (or later-mentioned optical information recording medium 201) when reproducing information from the first information recording medium 20 and a later-mentioned first information recording medium 70. The first reproduction light is emitted by the driving apparatus corresponding to a new standardized optical information recording medium. The first reproduction light is emitted not only to the first information recording layer 20 but also to the first information recording layer 70 of later-mentioned optical information recording media 300 and 301.

The intermediate layer 30 is made of transparent ultraviolet curing resin of $25\mu m$ in thickness for example. The material of the intermediate layer 30 is not limited to this and may be anything as long as the material has high transmittance with respect to the reproduction light wavelength. The thickness of the intermediate layer 30 is not limited to $25\mu m$ and may be any thickness as long as the thickness allows individual information recording layers (here, the first information recording layer 20 and the second information recording layer 40) to be positioned separately from each other and prevents inter-layer crosstalk. The inter-layer cross talk indicates noises from an information recording layer other than an information recording layer from which information is being reproduced. Further, the intermediate layer 30 may have a multi-layered structure. The intermediate layer 30 has, on a plane closer to the first information recording layer 20, prepits (not shown) made of concavities and convexities corresponding to information recorded as shapes on the first information recording layer 20.

The second information recording layer 40 is a RE layer and is constituted by seven thin films. The seven thin films are a first protective film 41 (e.g. ZnS-SiO$_2$ of 35nm in thickness), a second protective film 42 (e.g. ZrO of 5nm in thickness), a recording layer 43 (e.g. GeTe-Sb$_2$Te$_3$ of 10nm in thickness), a third protective film 44 (e.g. ZrO of 5nm in thickness), a fourth protective film 45 (e.g. ZnS-SiO$_2$ of 35nm in thickness), a fifth protective film 46 (e.g. ZrO of 5nm in thickness), and a reflective film 47 (e.g. APC (AgPdCu) of 20nm in thickness) that are laminated in this order from a reproduction-light-incoming side. The materials and the thickness of the second information recording layer 40 and the number of layers constituting the second information recording layer 40 are not limited to these as long as the materials, the thickness, and the number allow the second information recording layer 40 to serve as a RE layer.

The substrate 50 is made of polycarbonate of 1.1 mm in thickness. The material and the thickness of the substrate 50 are not limited to these as long as the substrate 50 is designed such that the substrate 50 has grooves on its surface and has a predetermined strength sufficient to allow the substrate 50 to be used as a substrate. Specifically, the substrate 50 may be made of polyolefin resin, metal, etc. Further, the substrate 50 may have a multi-layered structure.

The substrate 50 may have, on its surface, prepits made of concavities and convexities corresponding to information recorded as shapes on the second information recording layer 40 in addition to the grooves. In this case, a region where the prepits are provided in the second information recording layer 40 serves as a region where information is only reproducible. That is, the second information recording layer 40 may include a RE region and a ROM region.

As shown in Fig. 2, an optical information recording medium 201 that is another example of Embodiment 1 includes a light-transmitting layer 10, a first information recording layer 20, an intermediate layer 30, a third information recording layer (rewritable layer, information recording layer) 60, an intermediate layer 30, a second information recording layer 40, and a substrate 50 that are laminated in this order from a reproduction-light-incoming side. Fig. 2 is a cross sectional drawing schematically showing an example of a structure of the optical information recording medium 201 according to Embodiment 1.

The light-transmitting layer 10 is made of ultraviolet curing resin of 50$\mu$m in thickness for example. The material of the light-transmitting layer 10 is not limited as long as the material has high transmittance with respect to a wavelength of reproduction light. That is, the light-transmitting layer 10 may be made of a polycarbonate film and a transparent adhesive. Further, the light-transmitting layer 10 may be provided on its surface with a hard coat for protecting the surface. Further, the thickness of the light-transmitting layer 10 may be changed depending on an optics system of a reproduction apparatus (driving apparatus) for the optical information recording medium 201. Specifically, the light-transmitting layer 10 may be made of a polycarbonate substrate of 0.6mm in thickness.

The first information recording layer 20 is a ROM layer made of aluminum nitride of 15nm in thickness, whose refractive index is adjusted by a flow rate of nitrogen when the layer is formed. The thickness and the material of the first information recording layer 20 are not limited to these, and may be other thickness and other material as long as the thickness and the material allow reflectance of the first information recording layer 20 with respect to a reproduction light wavelength to be more than 0.4% and not more than 2.2% for example. That is, the first information recording layer 20 should be designed such that the first information recording layer 20 has translucency with respect to the reproduction light wavelength and the reflectance thereof is such a value as not to allow focus pull-in with respect to second reproduction light for reproducing information from the rewritable layer (second information recording layer 40 and third information recording layer 60) and to allow focus pull-in with respect to first reproduction light for reproducing information from the first information recording layer 20. Specifically, the first information recording layer 20 may be made of silicon nitride or mainly made of aluminum nitride or silicon nitride, and may have a multi-layered structure.

The intermediate layer 30 is made of transparent ultraviolet curing resin of 25$\mu$m in thickness for example. The material of the intermediate layer 30 is not limited to this and may be anything as long as the material has high transmittance with respect to the reproduction light wavelength. The thickness of the intermediate layer 30 is not limited to 25$\mu$m and may be any thickness as long as the thickness allows individual information recording layers (here, the first information recording layer 20, the second information recording layer 40, and the third information recording layer 60) to be positioned separately from each other and prevents inter-layer crosstalk. Further, the intermediate layer 30 may have a multi-layered structure.

The intermediate layer 30 between the first information recording layer 20 and the third information recording layer 60 has, on a plane closer to the first information recording layer 20, prepits made of concavities and convexities corresponding to information recorded as shapes on the first information recording layer 20.

The intermediate layer 30 between the second information recording layer 40 and the third information recording layer 60 has grooves on a plane closer to the third information recording layer 60. In addition to the grooves, the intermediate layer 30 may have prepits made of concavities and convexities corresponding to information recorded as shapes on the third information recording layer 60. In this case, a region where the prepits are provided in the third information recording layer 60 serves as a region where information is only reproducible. That is, the third information recording layer 60 may include a RE region and a ROM region.

The second information recording layer 40 is a RE layer and is constituted by seven thin films. The seven thin films are a first protective film 41 (e.g. ZnS-SiO$_2$ of 35nm in thickness), a second protective film 42 (e.g. ZrO of 5nm in thickness), a recording layer 43 (e.g. GeTe-Sb$_2$Te$_3$ of 10nm in thickness), a third protective film 44 (e.g. ZrO of 5nm in thickness), a fourth protective film 45 (e.g. ZnS-SiO$_2$ of 35nm in thickness), a fifth protective film 46 (e.g. ZrO of 5nm in thickness), and a reflective film 47 (e.g. APC (AgPdCu) of 20nm in thickness) that are laminated in this order from a reproduction-light-incoming side. The materials and the thickness of the second information recording layer 40 and the number of layers constituting the second information recording layer 40 are not limited to these as long as the materials, the thickness, and the number allow the second information recording layer 40 to serve as a RE layer.

The third information recording layer 60 is a RE layer and is constituted by six thin films. The six thin films are a first protective film 61 (e.g. ZnS-SiO$_2$ of 35nm in thickness), a second protective film 62 (e.g. ZrO of 5nm in thickness), a recording layer 63 (e.g. GeTe-Sb$_2$Te$_3$ of 6nm in thickness), a third protective film 64 (e.g. ZrO of 5nm in thickness), a semi-transparent film 65 (e.g. APC (AgPdCu) of 20nm in thickness), and a transmittance adjustment film 66 (TiO$_2$ of 19nm in thickness) that are laminated in this order from a reproduction-light-incoming side. The materials and the thickness of the third information recording layer 60 and the number of layers constituting the third information recording layer 60 are not limited to these as long as the materials, the thickness, and the number allow the third information recording layer 60 to serve as a RE layer having transmittance of approximately 60% with respect to the reproduction light wavelength.

The substrate 50 is made of polycarbonate of 1.1 mm in thickness. The material and the thickness of the substrate 50 are not limited to these as long as the substrate 50 is designed such that the substrate 50 has grooves on its surface and has a predetermined strength sufficient to allow the substrate 50 to be used as a substrate. Specifically, the substrate 50 may be made of polyolefin resin, metal, etc. Further, the substrate 50 may have a multi-layered structure.

The substrate 50 may have, on its surface, prepits made of concavities and convexities corresponding to information recorded as shapes on the second information recording layer 40 in addition to the grooves. In this case, a region where the prepits are provided in the second information recording layer 40 serves as a region where information is only reproducible. That is, the second information recording layer 40 may include a RE region and a ROM region.

The optical information recording medium 201 according to Embodiment 1 is not limited to the above, and may be designed such that one of the RE layers is replaced with a R layer or a ROM layer. Further, the optical information recording media 200 and 201 according to Embodiment 1 are not limited to a two-layered or three-layered structure and may additionally include an information recording layer.

[Examples]

The optical information recording medium 200 according to Embodiment 1, shown in Fig. 1, was manufactured as Example 1. An optical information recording medium 202 shown in Fig. 3 was manufactured as Comparative Example 1. The following explains structures of Example 1 and Comparative Example 1 with reference to Figs. 1 and 3, respectively. Fig. 3 is a cross sectional drawing schematically showing a structure of the optical information recording medium 202 serving as Comparative Example 1 in comparison with the optical information recording medium 200 serving as Example 1.

As shown in Fig. 1, the optical information recording medium 200 serving as Example 1 includes the light-transmitting layer 10, the first information recording layer 20, the intermediate layer 30, the second information recording layer 40, and the substrate 50 that are laminated in this order from a reproduction-light-incoming side.

The light-transmitting layer 10 was made of ultraviolet curing resin (whose refractive index was 1.50 with respect to reproduction light wavelength) of $75\mu m$ in thickness.

The first information recording layer 20 was a ROM layer made of aluminum nitride of 15nm in thickness, whose refractive index is adjusted by a flow rate of nitrogen when the layer is formed (the refractive index was 2.01 with respect to reproduction light wavelength). A film of aluminum nitride constituting the first information recording layer 20 was formed on a surface of the intermediate layer 30 by sputtering.

The intermediate layer 30 was made of transparent ultraviolet curing resin of $25\mu m$ in thickness (whose refractive index was 1.50 with respect to reproduction light wavelength). The intermediate layer 30 has, on a plane closer to the first information recording layer 20, prepits made of concavities and convexities corresponding to information recorded as shapes on the first information recording layer 20 by 2P method (photo polymerization method). The 2P method is a method in which ultraviolet curing resin fills between a flat plate and an original plate, the ultraviolet resin is cured by emission of ultraviolet light, and then the original plate is detached so that concavities and convexities of the original plate are transferred to the flat plate.

The second information recording layer 40 was a RE layer and was constituted by seven thin films that were laminated by sputtering. Specifically, the seven thin films were the first protective film 41 (e.g. ZnS-SiO$_2$ of 35nm in thickness), the second protective film 42 (e.g. ZrO of 5nm in thickness), the recording layer 43 (e.g. GeTe-Sb$_2$Te$_3$ of 10nm in thickness), the third protective film 44 (e.g. ZrO of 5nm in thickness), the fourth protective film 45 (e.g. ZnS-SiO$_2$ of 35nm in thickness), the fifth protective film 46 (e.g. ZrO of 5nm in thickness), and the reflective film 47 (e.g. APC (AgPdCu) of 20nm in thickness) that were laminated in this order from a reproduction-light-incoming side.

The substrate 50 was a disc-like polycarbonate substrate of 120mm in diameter and 1.1mm in thickness, having grooves thereon.

As shown in Fig. 3, the optical information recording medium 202 serving as Comparative Example 1 includes the light-transmitting layer 10, a first information recording layer 120, the intermediate layer 30, the second information recording layer 40, and the substrate 50. The first information recording layer 120 was made of a conventionally used metal semi-transparent film APC (AgPdCu) of 5nm in thickness. Other layers (light-transmitting layer 10, intermediate layer 30, second information recording layer 40, and substrate 50) were the same as those of Example 1.

Transmittance of the first information recording layer was 95% in Example 1 and 80% in Comparative Example 1. Reflectance of the first information recording layer 20 in Example 1 with respect to the reproduction light wavelength was 1.8%, and a return light ratio of the second information recording layer 40 was 13.5%. On the other hand, reflectance of the first information recording layer 120 in Comparative Example 1 with respect to the reproduction light wavelength was 8%, and a retuning light ratio of the second information recording layer 40 was 9.6%.

Subsequently, S-characteristics of Example 1 and Comparative Example 1, detected when counting the number of information recording layers in the initial stage of reproduction, were measured by a disc tester (ODU-1000, manufactured by Pulstec Industrial Co., Ltd.) having (i) a semiconductor laser capable of emitting laser light of 406nm in wavelength and (ii) an optics system of 0.85 in N.A. (open area ratio), generally used as a BD tester. The results of the measurements are shown in Figs. 4 and 5.

Fig. 4 shows S-characteristics that were obtained by emitting, to the optical information recording media 200 and 202, laser light having intensity of 0.7mW that is used for reproducing information from a RE layer and that is the maximum intensity in a current-standardized BD driving apparatus. (a) of Fig. 4 shows a S-characteristic obtained by measuring the optical information recording medium 200 of Example 1. (b) of Fig. 4 shows a S-characteristic obtained by measuring the optical information recording medium 202 of Comparative Example 1. Fig. 5 shows S-characteristics obtained by emitting, to the optical information recording medium 200 of Example 1, laser light having intensity of 1.0mW that is used for reproducing information from a ROM layer.

As shown in (a) of Fig. 4, the measured value of the S-characteristic of the first information recording layer 20 of Example 1 was 186mV, which is smaller than a reference voltage +V1 (230mV) that allows the disc tester to focus. Accordingly, (a) of Fig. 4 shows that the driving apparatus that counts the number of information recording layers by using laser light of 0.7mW that is the maximum intensity in the current-standardized BD driving apparatus (old-standardized driving apparatus not corresponding to the first information recording layer 20) cannot identify the first information recording layer 20 as an information recording layer. It naturally follows that the old-standardized driving apparatus cannot focus on the first information recording layer 20. In fact, although the disc tester can be used more universally and is capable of dealing with more kinds of optical information recording media compared with a commercially available consumer disc driving apparatus, even the disc tester could not focus on the first information recording layer 20. The reference voltage +V1 was set as a value that allows the ODU-1000 to reproduce and evaluate information stored in a two-layered information recording medium.

On the other hand, as shown in (b) of Fig. 4, the measured value of the S-characteristic of the first information recording layer 120 of Comparative Example 1 was 847mV, which is larger than a reference voltage +V1 (230mV). Accordingly, (b) of Fig. 4 shows that the driving apparatus that counts the number of information recording layers by using laser light of 0.7mW that is the maximum intensity in the current-standardized BD driving apparatus (old-standardized driving apparatus not corresponding to the first information recording layer 120) can identify the first information recording layer 120 as an information recording layer.

In view of the above, the first information recording layer 20 of Example 1 is extremely less likely to be identified by the old-standardized driving apparatus when the driving apparatus counts the number of information recording layers by using laser light of 0.7mW that is the maximum intensity in the current-standardized BD driving apparatus, compared with Comparative Example 1. That is, the first information recording layer 20 cannot be focused on by the disc tester that is more versatile than a generally used driving apparatus, and therefore cannot be substantially identified by the old-standardized driving apparatus.

On the other hand, the first information recording layer 120 of Comparative Example 1 is highly likely to be identified by the old-standardized driving apparatus when the driving apparatus counts the number of information recording layers by using laser light of 0.7mW that is the maximum intensity in the current-standardized BD driving apparatus. This is because the old-standardized driving apparatus generally in use at present can deal with two information recording layers. However, since the old-standardized driving apparatus identifies the first information recording layer 120 that is an information recording layer unknown to the old-standardized driving apparatus, defective reproduction may occur.

Further, as shown in Fig. 5, the measured value of the S-characteristic of the first information recording layer 20 of Example 1 was 274 mV, which is larger than a reference voltage +V1 (230mV). Accordingly, Fig. 5 shows that the driving apparatus that counts the number of information recording layers by using laser light of 1.0mW that is intensity for reproducing information from the first information recording layer 20 (new-standardized driving apparatus corresponding to the first information recording layer 20) can identify the first information recording layer 120 as an information recording layer. It naturally follows that the new-standardized driving apparatus can focus on the first information recording layer 20 and reproduce information from the first information recording layer 20. In fact, it was confirmed in the test that the first information recording layer 20 could be focused on.

As shown in (a) of Fig. 4 and Fig. 5, measured values of the S-characteristics of the second information recording layer 40 of Example 1 are 1438mV and 2105mV, respectively, and both exceed the reference voltage +V1 (230mV). Accordingly, both of the old-standardized driving apparatus and the new-standardized driving apparatus can focus on the second information recording layer 40 and record/reproduce information on/from the second information recording layer 40.

As described above, even when the optical information recording medium 200 according to Embodiment 1 is read by the old-standardized driving apparatus, the optical information recording medium 200 does not suffer defective reproduction of information, unlike Comparative Example 1, and information can be recorded on/reproduced from the second information recording layer 40. Further, since the new-standardized driving apparatus can reproduce information stored in the first information recording layer 20, it is possible for the optical information recording medium 200 to have increased recording capacity while maintaining the limit value of recording capacity of the second information recording layer 40. The same is true for the optical information recording medium 201 of Embodiment 1.

The limit of focusing on an information recording layer by a generally used driving apparatus depends on the S-characteristics as described above, and therefore basically depends on the amount of reflective light. Using a plurality of samples, upper limits of reflectance of an information recording layer that does not allow focusing with respect to individual intensities of reproduction laser lights were measured using the disc tester. The results of the measurements are shown in Fig. 6.

It is seen from Fig. 6 that the upper limit of the reflectance of an information recording layer that does not allow focusing on the information recording layer (does not allow identification of the information recording layer) is 2.2% with respect to 0.7mW that is the maximum intensity of reproduction laser light in a current-standardized BD driving apparatus.

There is a possibility that the intensity of reproduction laser light varies depending on individual BD driving apparatuses, and therefore the actual maximum intensity may be higher by approximately 20% than the aforementioned maximum intensity (i.e. the actual maximum intensity may be 0.84mW). In this case (intensity of reproduction laser light = 0.84mW), the upper limit of the reflectance of an information recording layer that does not allow focusing on the information recording layer (does not allow identification of the information recording layer) is 1.8% calculated from the result of Fig. 6.

The optical information recording media 200 and 201 according to Embodiment 1 include RE layers (second information recording layer 40 and third information recording layer 60). Accordingly, when counting the number of information recording layers, there is a possibility that reproduction light with high intensity for reproducing information from the first information recording layer 20 is condensed and incident to the RE layer.

Counting of the number of information recording layers is generally carried out at a lead-in area. Thus, the reflectance of a lead-in area of a commercially available single-layer BD-RE was measured using a disc tester (DDU-1000, manufactured by Pulstec Industrial Co., Ltd.) having (i) a semiconductor laser capable of emitting laser light of 406nm in wavelength and (ii) an optics system of 0.85 in N.A. (open area ratio), and capable of increasing intensity of reproduction laser light compared with the aforementioned disc tester.

Initially, the reflectance of the lead-in area was measured with respect to reproduction light of 0.35mW that is the intensity of reproduction light for a single-layer BD. Subsequently, reproduction light with higher intensity is emitted to the lead-in area, and then the reproduction light of 0.35mW is emitted to the lead-in area again to measure the reflectance of the lead-in area. Thus, it was examined what intensity of reproduction light causes deterioration of the RE layer (drop in the reflectance of the lead-in area).

The result of the examination shows that the reflectance did not change while the intensity of the reproduction light was 3.5mW or less, but the reflectance dropped by 5% (the RE layer deteriorated) at the intensity of 4.0mW. That is, when counting the number of information recording layers by using laser light with intensity of more than 3.5mW, there is a possibility that the lead-in area of the RE layer deteriorates. It is seen from the result of Fig. 6 that the upper limit of the reflectance that does not allow focusing of an information recording layer at intensity of 3.5mW is 0.4%. Accordingly, the reflectance of the first information recording layer should be more than 0.4%.

There is a case where focus is shifted by physical impact when reading the optical information recording media 200 and 201. In this case, there is a possibility that reproduction light for reproducing information from the first information recording layer 20 is emitted to an information recording section of an information area of a RE layer (second information recording layer 40 or third information recording layer 60). In view of this case, a measurement was carried out in which reproduction light was emitted to the information recording section of a currently commercially available two-layered RE-BD and it was examined at what intensity of reproduction light recorded information deteriorated. The measurement was carried out using the aforementioned disc tester (ODU-1000) and index of deterioration of the recorded information was jitter which is generally used as an index of reproduction signal quality. The result of the measurement is shown in Fig. 7.

It is seen from Fig. 7 that when the intensity of reproduction light got higher than 1.2mW, jitter of the first information recording layer (RE layer) of the two-layered RE-BD greatly deteriorated (RE layer deteriorated). That is, it is seen from Fig. 7 that the upper limit of intensity of reproduction light that does not deteriorate information recorded on the RE layer is 1.2mW.

The result of Fig. 6 shows that the upper limit of the reflectance that does not allow focusing at intensity of reproduction light being 1.2mW is 1.2%. Accordingly, the reflectance of more than 1.2% allows focusing at the intensity of reproduction light being 1.2mW or less.

Therefore, the reflectance of the first information recording layer 20 of the optical information recording media 200 and 201 according to Embodiment 1 with respect to the reproduction light wavelength is preferably more than 0.4% and not more than 2.2%, and is further preferably more than 1.2% and not more than 1.8%.

The results of the measurements by the disc testers do not change as long as the reproduction light wavelength is within the range of the blue laser wavelength.

When a measured value of the S-characteristic detected from an information recording layer exceeds a predetermined reference voltage, a commonly used driving apparatus identifies the information recording layer. When the driving apparatus identifies the information recording layer, the identified information recording layer is focused on, allowing reproduction of information from the information recording layer. The reason why the result of detection of the S-characteristic allows focusing and reproduction of information is explained below.

Initially, the following explains a reproduction system 100 capable of reproducing information from a commonly used multi-layered optical information recording medium. With reference to Fig. 8, an explanation is made below as to a structure of the reproduction system 100 that reproduces information from an optical information recording medium 400 with four layers shown in Fig. 9 for example.

As shown in Fig. 8, a disc driving motor 101 of the reproduction system 100 drives an optical information recording medium 400 with a disc-shape (as for a schematic cross sectional structure of the optical information recording medium 400, see Fig. 9) to rotate at a predetermined velocity. The disc driving motor 101 is controlled by a motor control circuit 109. An optical pickup 102 reads information from the optical information recording medium 400 that is rotating.

The optical pickup 102 is designed such that it can be moved by driving force of a field motor 111 in a radius direction of the optical information recording medium 400. The field motor 111 is controlled by a field motor control circuit 108. The field motor 111 is designed such that its rotation velocity is detected by a velocity detector 112. The velocity detector 112 transmits the result of the detection as a velocity signal to the field motor control circuit 108.

The optical pickup 102 includes an objective lens 102a. The objective lens 102a is supported in such a manner that it is movable both in a focus direction (optical axis direction) and a tracking direction (radius direction of the optical information recording medium 400). The position of the objective lens 102a in a focus direction is controlled by a focus driving coil 102c receiving a focus control signal generated in a focus control circuit 105. Similarly, the position of the objective lens 102a in a tracking direction is controlled by a tracking driving coil 102b receiving a tracking control signal generated in a tracking control circuit 108.

A laser control circuit 103 drives a semiconductor laser oscillator 102f in the optical pickup 102 so that the semiconductor laser oscillator 102f generates laser light. A light intensity detector 102g detects intensity of laser light generated by the semiconductor laser oscillator 102f and feedbacks the result of the detection to the laser control circuit 103. This configuration allows the laser control circuit 103 to keep intensity of the laser light generated by the semiconductor laser oscillator 102f constant.

Laser light generated by the semiconductor laser oscillator 102f passes through a collimator lens 102e and is subjected to change of a direction at a right angle by a half prism 102d, and is focused by the objective lens 102a on any of information recording layers of the optical information recording medium 400. Any of the optical information recording medium 400 indicates one of a first information recording layer A, a second information recording layer B, a third information recording layer C, and a fourth information recording layer D that are shown in Fig. 9. Each of the first information recording layer A, the second information recording layer B, the third information recording layer C, and the fourth information recording layer D is a ROM layer for reproduction only, obtained by forming APC (AgPdCu) on prepits made of concavities and convexities provided according to information and thus fixing the shape of APC (AgPdCu).

Reflected light from the optical information recording medium 400 passes through the objective lens 102a backwardly and passes through the half prism 102d straightly, and then received by a photoelectric transfer device 102j via a condensing lens 102h and a cylindrical lens 102i. The photoelectric transfer device 102j includes four photodetectors 102j1-102j4 each generating an electric signal corresponding to the amount of received light. The photoelectric transfer device 102j is designed such that a direction in which the photodetectors 102j1 and 102j2 are arrayed and a direction in which the photodetectors 102j3 and 102j4 are arrayed correspond to a tracking direction of the optical information recording medium 400, and a direction in which the photodetectors 102j1 and 102j4 are arrayed and a direction in which the photodetectors 102j2 and 102j3 are arrayed correspond to a tangential direction of the optical information recording medium 400.

An electric signal from the photodetector 102j1 is supplied to terminals of addition circuits 113a and 113d via an amplifier circuit 114a, and an electric signal from the photodetector 102j2 is supplied to terminals of addition circuits 113b and 113c via an amplifier circuit 114b. Further, an electric signal from the photodetector 102j3 is supplied to the other terminals of addition circuits 113a and 113c via an amplifier circuit 114c, and an electric signal from the photodetector 102j4 is supplied to the other terminals of addition circuits 113b and 113d via an amplifier circuit 114d.

An output signal from the addition circuit 113a is supplied to an inverting input terminal - of a differential amplifier circuit 104 and an output signal from the addition circuit 113b is supplied to a non-inverting input terminal + of the differential amplifier circuit 104. The differential amplifier circuit 104 calculates a difference in the output signal between the addition circuits 113a and 113b to generate a focus error signal, and supplies the focus error signal to the focus control circuit 105. The focus control circuit 105 generates a focus control signal to be supplied to the focus driving coil 102c so that the focus error signal input to the focus control circuit 105 becomes 0 level. Thus, focus servo to the objective lens 102a is carried out.

When there was carried out a focus searching process (i.e. process for counting the number of information recording layers) while a position where laser light is condensed by the objective lens 102a is sequentially moved from its initial position toward a focus direction, the focus error signal from the differential amplifier circuit 104 exhibits S-characteristic as shown in Fig. 10. Specifically, when there was carried out the focus searching process, the focus error signal exhibits the S-characteristic shown in Fig. 10 every time the position where laser light is condensed by the objective lens 102a passes through the information recording layer (first information recording layer A, fourth information recording layer D, third information recording layer C, and second information recording layer B). The initial position is a position which the objective lens 102a takes before it focuses. In general, in Fig. 8, the initial position indicates a position which is under the first information recording layer A of the optical information recording medium 400 and which is farthest from the optical information recording medium 400 in an optical axis direction.

For example, when starting reproduction of information from the optical information recording medium 400, the reproduction system 100 causes the semiconductor laser oscillator 102f in the optical pickup 102 to generate reproduction light corresponding to a single-layer optical information recording medium.

Subsequently, the position where the laser light is condensed by the objective lens 102a is moved upward from the initial position to a drive limit position in Fig.8. The reproduction system 100 counts the number of a focus error signal exceeding a predetermined reference voltage + VO and thus recognizes the number of information recording layers of the optical information recording medium 400.

Thereafter, the reproduction system 100 changes intensity of the reproduction light according to the number of information recording layers of the optical information recording medium 400. Then, with the changed intensity of the reproduction light, the reproduction system 100 moves downward the position where the laser light is condensed by the objective lens 102a from the drive limit position to the initial position in Fig. 8. At that time, gain of an amplifier in the focus control circuit 105 etc. is changed so that a voltage value of a focus error signal detected from an information recording layer that is initially subjected to a focus searching process has a suitable value.

In a case of carrying out the focus searching process on the second information recording layer B for example, the reproduction system 100 counts the number of a focus error signal exceeding a predetermined reference voltage + V0. At the time when the focus error signal gets 0 level (central level of focus servo operation) for the first time after the number reaches four, the reproduction system 100 makes the focus servo ON. Thus, the reproduction system 100 completes the focus searching process on the second information recording layer B.

Fig. 11 is a drawing showing transition of the position of the objective lens and the focus error signal when the reproduction system 100 carries out the focus searching process on the second information recording layer 40. (a) of Fig. 11 shows transition of the position of the objective lens. (b) of Fig. 11 shows the focus error signal.

Further, in a case of layer-jumping from the fourth information recording layer D to the second information recording layer B, the reproduction system 100 temporarily makes the focus servo OFF, and sequentially moves the position where the laser light is condensed by the objective lens 102a from the fourth information recording layer D to the second information recording layer B. The reproduction system 100 counts the number of a focus error signal exceeding a predetermined reference voltage + V0. At the time when the focus error signal gets 0 level for the first time after the number reaches two, the reproduction system 100 makes the focus servo ON. Thus, the reproduction system 100 completes the layer jumping process. The layer jumping process is not shown as it is substantially the same process as the focus searching process.

Further, in the focus searching process, the retardation detection circuit 107 detects retardation between the sum of output signals from the photodetectors 102j1 and 102j4 of the photoelectric transfer device 102j and the sum of output signals from the photodetectors 102j2 and 102j3. Then, the retardation detection circuit 107 transmits the result of the detection as a tracking error signal to the tracking control circuit 106.

The tracking control circuit 106 generates, in response to the input tracking error signal, a tracking control signal to be supplied to the tracking driving coil 102b, so as to carry out tracking servo on the objective lens 102a. The reproduction system 100 reproduces information from the optical information recording medium 400 while carrying out the tracking servo on the objective lens 102a. Electric signals output from the addition circuits 113c and 113d are summed up by the addition circuit 113e, and converted into a digital signal by a data reproduction circuit 110.

The laser control circuit 103, the focus control circuit 105, the tracking control circuit 108, the motor control circuit 109, and the data reproduction circuit 110 of the reproduction system 100 are controlled by a control section 115. The control section 115 stores information regarding recording/reproduction of information on/from the optical information recording medium 400 to be loaded into the reproduction system 100. The control section 115 controls the aforementioned circuits in accordance with the information.

As the reflectance of the information recording layer is larger, the voltage value of a focus error signal of the reproduction system 100 is larger.

The following explains a flow of a process carried out by the reproduction system 100 for reproducing information from a general multi-layer optical information recording medium (here, optical information recording medium 400). Fig. 12 is a flowchart showing the flow of the process carried out by the reproduction system 100 for reproducing information from the multi-layer optical information recording medium.

Initially, the optical information recording medium 400 is loaded into the reproduction system 100, and then is rotated by the disc driving motor 101 at a predetermined rotation number (S1). Subsequently, the control section 115 moves the optical pickup 102 to a position facing a lead-in area of the optical information recording medium 400, and carries out a focus searching process on a target layer (S2). The target layer is one of the first information recording layer A, the second information recording layer B, the third information recording layer C, and the fourth information recording layer D of the optical information recording medium 400. The tracking control circuit 106 carries out a tracking process (S3), and thus the reproduction system 100 carries out an information reproducing process (S4).

As described above, in the reproduction system 100, identification of individual information recording layers and focusing on individual information recording layers are carried out based on the S-characteristics obtained from individual information recording layers. Since the reproduction system 100 for a multi-layer information recording medium is used for a driving apparatus, the driving apparatus can determine whether the information recording layers exist or not and determine whether information can be reproduced from the information recording layers by measuring the S-characteristics of individual information recording layers.

[Embodiment 2]

The following explains Embodiment 2 of the present invention with reference to Figs. 13 and 14. Optical information recording media 300 and 301 of Embodiment 2 are different from the optical information recording media 200 and 201 of Embodiment 1 in that a first information recording layer 70 of the optical information recording media 300 and 301 is a R layer whereas the first information recording layer 20 of the optical information recording media 200 and 201 is a ROM layer.

As shown in Fig. 13, an optical information recording medium 300 that is one example of Embodiment 2 includes a light-transmitting layer 10, a first information recording layer (first information recording layer, information recording layer) 70, an intermediate layer 30, a second information recording layer 40, and a substrate 50 that are laminated in this order from a reproduction-light-incoming side. Fig. 13 is a cross sectional drawing schematically showing an example of a structure of the optical information recording medium 300 according to Embodiment 2.

The light-transmitting layer 10 is made of ultraviolet curing resin of $75\mu m$ in thickness for example. The material of the light-transmitting layer 10 is not limited as long as the material has high transmittance with respect to a wavelength of reproduction light. That is, the light-transmitting layer 10 may be made of a polycarbonate film and a transparent adhesive. Further, the light-transmitting layer 10 may be provided on its surface with a hard coat for protecting the surface. Further, the thickness of the light-transmitting layer may be changed depending on an optics system of a reproduction apparatus (driving apparatus) for the optical information recording medium 300. Specifically, the light-transmitting layer 10 may be made of a polycarbonate substrate of 0.6mm in thickness.

The first information recording layer 70 is a R layer made of bismuth oxide and germanium oxide of 15nm in thickness. The thickness and the material of the first information recording layer 70 are not limited to these, and may be other thickness and other material as long as the thickness and the material allow reflectance of the first information recording layer 70 with respect to a reproduction light wavelength to be more than 0.4% and not more than 2.2% for example. That is, the first information recording layer 70 should be designed such that the first information recording layer 70 has translucency with respect to the reproduction light wavelength and the reflectance thereof is such a value as not to allow focus pull-in with respect to second reproduction light for reproducing information from the rewritable layer (second information recording layer 40) and to allow focus pull-in with respect to first reproduction light for reproducing information from the first information recording layer 70. Specifically, the first information recording layer 70 may be a dielectric body mainly made of bismuth oxide and germanium oxide instead of the bismuth oxide and germanium oxide as described above, and may have a multi-layered structure.

The intermediate layer 30 is made of transparent ultraviolet curing resin of $25\mu m$ in thickness for example. The material of the intermediate layer 30 is not limited to this and may be anything as long as the material has high transmittance with respect to the reproduction light wavelength. The thickness of the intermediate layer 30 is not limited to $25\mu m$ and may be any thickness as long as the thickness allows individual information recording layers (here, the first information recording layer 70 and the second information recording layer 40) to be positioned separately from each other and prevents inter-layer crosstalk. Further, the intermediate layer 30 may have a multi-layered structure.

A plane of the intermediate layer 30 which is closer to the first information recording layer 70 has grooves. In addition to the grooves, the plane may have prepits made of concavities and convexities corresponding to information stored as shapes on the first information recording layer 70. In this case, a region of the first information recording layer 70 where the prepits are provided is a region where information is only reproducible. That is, the first information recording layer 70 may include a R region and a ROM region.

The second information recording layer 40 is a RE layer and is constituted by seven thin films. The seven thin films are a first protective film 41 (e.g. $ZnS\text{-}SiO_2$ of 35nm in thickness), a second protective film 42 (e.g. ZrO of 5nm in thickness), a recording layer 43 (e.g. $GeTe\text{-}Sb_2Te_3$ of 10nm in thickness), a third protective film 44 (e.g. ZrO of 5nm in thickness), a fourth protective film 45 (e.g. $ZnS\text{-}SiO_2$ of 35nm in thickness), a fifth protective film 46 (e.g. ZrO of 5nm in thickness), and a reflective film 47 (e.g. APC (AgPdCu) of 20nm in thickness) that are laminated in this order from a reproduction-light-incoming side. The materials and the thickness of the second information recording layer 40 and the number of layers constituting the second information recording layer 40 are not limited to these as long as the materials, the thickness, and the number allow the second information recording layer 40 to serve as a RE layer.

The substrate 50 is made of polycarbonate of 1.1 mm in thickness for example. The material and the thickness of the substrate 50 are not limited to these as long as the substrate 50 is designed such that the substrate 50 has grooves on its surface and has a predetermined strength sufficient to allow the substrate 50 to be used as a substrate. Specifically, the substrate 50 may be made of polyolefin resin, metal, etc. Further, the substrate 50 may have a multi-layered structure.

The substrate 50 may have, on its surface, prepits made of concavities and convexities corresponding to information recorded as shapes on the second information recording layer 40 in addition to the grooves. In this case, a region where the prepits are provided in the second information recording layer 40 serves as a region where information is only reproducible. That is, the second information recording layer 40 may include a RE region and a ROM region.

As shown in Fig. 14, an optical information recording medium 301 that is another example of Embodiment 2 includes a light-transmitting layer 10, a first information recording layer 70, an intermediate layer 30, a third information recording layer 60, an intermediate layer 30, a second information recording layer 40, and a substrate 50 that are laminated in this order from a reproduction-light-incoming side. Fig. 14 is a cross sectional drawing schematically showing an example of a structure of the optical information recording medium 301 according to Embodiment 2.

The light-transmitting layer 10 is made of ultraviolet curing resin of $50\mu m$ in thickness for example. The material of the light-transmitting layer 10 is not limited as long as the material has high transmittance with respect to a wavelength of reproduction light. That is, the light-transmitting layer 10 may be made of a polycarbonate film and a transparent adhesive. Further, the light-transmitting layer 10 may be provided on its surface with a hard coat for protecting the surface.

The first information recording layer 70 is a R layer made of bismuth oxide and germanium oxide of 15nm in thickness. The thickness and the material of the first information recording layer 70 are not limited to these, and may be other thickness and other material as long as the thickness and the material allow reflectance of the first information recording layer 70 with respect to a reproduction light wavelength to be more than 0.4% and not more than 2.2% for example. That is, the first information recording layer 70 should be designed such that the first information recording layer 70 has translucency with respect to the reproduction light wavelength and the reflectance thereof is such a value as not to allow focus pull-in with respect to second reproduction light for reproducing information from the rewritable layer (second information recording layer 40 and third information recording layer 60) and to allow focus pull-in with respect to first reproduction light for reproducing information from the first information recording layer 70. Specifically, the first information recording layer 70 may be made of a dielectric body mainly made of bismuth oxide and germanium oxide instead of the bismuth oxide and germanium oxide as described above, and may have a multi-layered structure.

The intermediate layer 30 is made of transparent ultraviolet curing resin of $25\mu m$ in thickness for example. The material of the intermediate layer 30 is not limited to this and may be anything as long as the material has high transmittance with respect to the reproduction light wavelength. The thickness of the intermediate layer 30 is not limited to $25\mu m$ and may be any thickness as long as the thickness allows individual information recording layers (here, the first information recording layer 70, the second information recording layer 40, and the third information recording layer 60) to be positioned separately from each other and prevents inter-layer crosstalk. Further, the intermediate layer 30 may have a multi-layered structure.

The intermediate layer 30 between the first information recording layer 70 and the third information recording layer 60 has grooves on a plane closer to the first information recording layer 70. In addition to the grooves, the intermediate layer 30 may have prepits made of concavities and convexities corresponding to information recorded as shapes on the first information recording layer 70. In this case, a region where the prepits are provided in the first information recording layer 70 serves as a region where information is only reproducible. That is, the first information recording layer 70 may include a R region and a ROM region.

The intermediate layer 30 between the second information recording layer 40 and the third information recording layer 60 has grooves on a plane closer to the third information recording layer 60. In addition to the grooves, the intermediate layer 30 may have prepits made of concavities and convexities corresponding to information recorded as shapes on the third information recording layer 60. In this case, a region where the prepits are provided in the third information recording layer 60 serves as a region where information is only reproducible. That is, the third information recording layer 60 may include a RE region and a ROM region.

The second information recording layer 40 is a RE layer and is constituted by seven thin films. The seven thin films are a first protective film 41 (e.g. $ZnS-SiO_2$ of 35nm in thickness), a second protective-film 42 (e.g. ZrO of 5nm in thickness), a recording layer 43 (e.g. $GeTe-Sb_2Te_3$ of 10nm in thickness), a third protective film 44 (e.g. ZrO of 5nm in thickness), a fourth protective film 45 (e.g. $ZnS-SiO_2$ of 35nm in thickness), a fifth protective film 46 (e.g. ZrO of 5nm in thickness), and a reflective film 47 (e.g. APC (AgPdCu) of 20nm in thickness) that are laminated in this order from a reproduction-light-incoming side. The materials and the thickness of the second information recording layer 40 and the number of layers constituting the second information recording layer 40 are not limited to these as long as the materials, the thickness, and the number allow the second information recording layer 40 to serve as a RE layer.

The third information recording layer 60 is a RE layer and is constituted by six thin films. The six thin films are a first protective film 61 (e.g. $ZnS-SiO_2$ of 35nm in thickness), a second protective film 62 (e.g. ZrO of 5nm in thickness), a recording layer 63 (e.g. GeTe-$Sb_2Te_3$ of 6nm in thickness), a third protective film 64 (e.g. ZrO of 5nm in thickness), a semi-transparent film 65 (e.g. APC (AgPdCu) of 20nm in thickness), and a transmittance adjustment film 66 ($TiO_2$ of 19nm in thickness) that are laminated in this order from a reproduction-light-incoming side. The materials and the thickness of the third information recording layer 60 and the number of layers constituting the third information recording layer 60 are not limited to these as long as the materials, the thickness, and the number allow the third information recording layer 60 to serve as a RE layer having transmittance of approximately 60% with respect to the reproduction light wavelength.

The substrate 50 is made of polycarbonate of 1.1 mm in thickness. The material and the thickness of the substrate 50 are not limited to these as long as the substrate 50 is designed such that the substrate 50 has grooves on its surface and has a predetermined strength sufficient to allow the substrate 50 to be used as a substrate. Specifically, the substrate 50 may be made of polyolefin resin, metal, etc. Further, the substrate 50 may have a multi-layered structure.

The substrate 50 may have, on its surface, prepits made of concavities and convexities corresponding to information recorded as shapes on the second information recording layer 40 in addition to the grooves. In this case, a region where the prepits are provided in the second information recording layer 40 serves as a region where information is only reproducible. That is, the second information recording layer 40 may include a RE region and a ROM region.

The optical information recording media 300 and 301 according to Embodiment 2 are not limited to a two-layered or three-layered structure and may additionally include an information recording layer.

As described above, the first information recording layer 70 of the optical information recording media 300 and 301 of Embodiment 2 has translucency with respect to the reproduction light wavelength and does not allow focus pull-in with respect to second reproduction light for reproducing information from the rewritable layer and allows focus pull-in with respect to first reproduction light for reproducing information from the first information recording layer 20. Consequently, in view of the result of the Example of Embodiment 1, even when the optical information recording media 300 and 301 are read by the old-standardized driving apparatus, the optical information recording media 300 and 301 do not suffer defective reproduction of information, and information can be recorded on/reproduced from the second information recording layer 40 (or third information recording layer 60). Further, since the new-standardized driving apparatus can reproduce information stored in the first information recording layer 70, it is possible for the optical information recording media 300 and 301 to have increased recording capacity while maintaining the limit value of recording capacity of the second information recording layer 40 and the third information recording layer 60.

[Embodiment 3]

The following explains Embodiment 3 of the present invention with reference to Fig. 15. A reproduction system (optical information recording medium driving apparatus) 600 that serves as an optical information recording medium driving apparatus according to Embodiment 3 of the present invention has a control section 615 instead of the control section 115 of the reproduction system 100 shown in Fig. 6. Members of the reproduction system 600 other than the control section 615 are the same as those of the reproduction system 100 and therefore explanations thereof are omitted here.

The control section 615 stores information for recording/reproducing information on/from the optical information recording media 200, 201, 300, and 301 according to Embodiments 1 and 2. The information includes, for example, intensity of reproduction light when counting the number of information recording layers, and intensity of reproduction light corresponding to individual information recording layers.

In a case where the optical information recording medium 200 is loaded, when starting counting of the number of information recording layers in the initial stage, the control section 615 controls a laser control circuit 603 so that the laser control circuit 603 drives a semiconductor laser oscillator 602f in an optical pickup 602. That is, the laser control circuit 603 causes the semiconductor laser oscillator 602f to generate reproduction light (first reproduction light) corresponding to the first information recording layer 20 of the optical information recording medium 200.

That is, in the reproduction system 600, even when the loaded optical information recording medium is one of the optical information recording media 200, 201, 300, and 301 according to Embodiments 1 and 2, the S-characteristics obtained from the first information recording layers 20 and 70 exceed the reference voltage + V0. Consequently, the reproduction system 600 can identify and focus on the first information recording layers 20 and 70 corresponding to the new standard, so that the reproduction system 600 can reproduce information from the first information recording layers 20 and 70.

When focusing on a layer other than the first information recording layers 20 and 70, the control section 615 controls the laser control circuit 603 so that the laser control circuit 603 generates reproduction light (second reproduction light) with lower intensity corresponding to an information recording layer other than the first information recording layers 20 and 70 (e.g. the second information recording layer 40 or the third information recording layer). Consequently, the reproduction system 600 can focus on an information recording layer other than the first information recording layers 20 and 70, so that the reproduction system 600 can reproduce information from the information recording layer.

Further, when the loaded optical information recording medium is an old-standardized optical information recording medium (such as optical information recording medium 500) different from the optical information recording media 200, 201, 300, and 301, the reproduction system 600 does not detect the S-characteristics specific to the new-standardized first information recording layers 20 and 70 after counting the number of information recording layers. Consequently, the reproduction system 600 can identify the optical information recording medium as not corresponding to the new standard.

Therefore, in the reproduction system 600, in the case of the old-standardized optical information medium as well as in the cases of the optical information recording media 200, 201, 300, and 301, the laser control circuit 603 is controlled by the control section 615 so that the laser control circuit 603 generates reproduction light (second reproduction light) with lower intensity corresponding to an information recording layer other than the first information recording layers 20 and 70. Consequently, the reproduction system 600 can reproduce information from individual information recording layers of the old-standardized optical information recording medium.

As described above, the reproduction system 600 serving as the optical information recording medium driving apparatus according to Embodiment 3 can surely reproduce information from individual information recording layers of an optical information recording medium regardless of whether the optical information recording medium corresponds to the new standard or the old standard.

The present invention is not limited to the description of the embodiments above, but may be altered by a skilled person within the scope of the claims. An embodiment based on a proper combination of technical means disclosed in different embodiments is encompassed in the technical scope of the present invention.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

With the arrangement, the reflectance of the first information recording layer with respect to the wavelength of the reproduction light wavelength is 2.2% or less. Consequently, for the reason explained later, the first information recording layer does not allow focus pull-in with respect to second reproduction light for reproducing information from the rewritable layer and allows focus pull-in with respect to first reproduction light, with higher intensity than the second reproduction light, for reproducing information from the first information recording layer.

Specifically, the optical information recording medium of the present invention is designed such that the first information recording layer closest to the plane where the reproduction light is incident out of the plurality of information recording layers is a layer where information is reproducible (ROM layer) and at least one layer other than the first information recording layer out of the plurality of information recording layers is a rewritable layer including a region where information is rewritable (RE layer) and the first information recording layer has translucency. Consequently, an optical information recording medium including two RE layers, which is conventionally difficult to include three or more layers, can be arranged to additionally include a ROM layer while hardly dropping return light ratios of the two RE layers. This allows increasing recording capacity of the optical information recording medium including the RE layers. Having translucency with respect to a wavelength of reproduction light indicates having transmittance of 80% or more with respect to the wavelength of the reproduction light. The focus pull-in indicates a state where focus servo is ON (i.e. state where focus position of laser light emitted from an optics system follows any information recording layer).

In a conventional hybrid optical information recording medium in which recording capacity is increased by additionally providing a ROM layer serving as a first information recording layer, the first information recording layer transmits reflective light from a second information recording layer and subsequent information recording layer (referred to as other information recording layer) that are RE layers whose material results in low reflectance (reflectance of approximately 15% with respect to a wavelength of reproduction light of approximately 405nm). Therefore, the ROM layer made of a metal such as Ag, Al, and Au is made thin in order to have high transmittance.

However, since the ROM layer is a metal layer, even when the ROM layer is made as thin as possible provided that the metal layer is evenly formed, the ROM layer still has reflectance of approximately 8% that is higher than reflectance of 5% of a first information recording layer of a two-layered RE-BD for example. Consequently, when reproduction light is emitted to the ROM layer, a S-characteristic sufficient for focus pull-in is detected from the ROM layer. Accordingly, a driving apparatus that does not correspond to the standard of the hybrid optical information recording medium is highly likely to detect the S-characteristic from the ROM layer. Consequently, it is highly likely that the driving apparatus cannot deal with the ROM layer unknown to the driving apparatus, resulting in defective reproduction.

In contrast thereto, the optical information recording medium of the present invention is designed such that the first information recording layer has translucency, and reflectance of the first information recording layer with respect to the wavelength of reproduction light is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the ROM layer is not provided.

Further, the optical information recording medium of the present invention is designed such that the first information recording layer has translucency, and reflectance of the first information recording layer with respect to the wavelength of reproduction light is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and can reproduce information from the first information recording layer. Consequently, the optical information recording medium of the present invention allows increasing recording capacity by recording capacity corresponding to the first information recording layer.

In particular, since an optical information recording medium including two RE layers, which is conventionally difficult to include three or more layers, can be arranged to additionally include a ROM layer, it is possible to increase recording capacity of the optical information recording medium while keeping limit value of each rewritable layer.

In a case where the optical information recording medium including two RE layers, which is conventionally difficult to include three or more layers, is arranged to additionally include a ROM layer, if the ROM layer is provided at a position different from that of the optical information recording medium of the present invention, a problem occurs. The reason is explained below.

Initially, in a case of an optical information recording medium in which a ROM layer is provided between two RE layers, it is necessary to provide the ROM layer at a position that does not cause interlayer crosstalk (noise from an information recording layer other than an information recording layer during reproduction) among three information recording layers. Consequently, providing the ROM layer broadens the distance between the two RE layers, with the result that an optical head of a driving apparatus corresponding to an old standard cannot reproduce information from such an optical information recording medium.

In general, an objective lens of an optical head is designed such that the objective lens focuses on a position with a predetermined distance from a reproduction-light-incident plane that is a surface of an optical information recording medium. In a case of a multi-layered optical information recording medium, the distances between the reproduction-light-incident plane and individual information recording layers are different. In this case, spherical aberration occurs at an information recording layer positioned with an optimal distance from the reproduction-light-incident plane, resulting in adverse influence on a reproduction signal in a driving apparatus. In order to cancel the spherical aberration, the driving apparatus is equipped with a beam expander for example.

However, in order to increase the range of the beam expander, it is necessary to provide an objective lens that meets a sine condition more satisfactory. Such an objective lens requires very strict conditions of common differences such as decentering error and inclination error, and therefore the objective lens gets expensive. Consequently, an optical head gets expensive. Therefore, it is often that a driving apparatus corresponding to an old-standardized optical information recording medium with no ROM layer does not include an optical head having a beam expander capable of dealing with a case where two RE layers have a large distance therebetween. Accordingly, it is highly possible that the driving apparatus corresponding to the old standard cannot reproduce information from each of the two RE layers.

Next, in a case of an optical information recording medium in which a ROM layer is provided behind two RE layers (i.e. a ROM layer is provided at a position closest to a substrate), if reflectances of the two RE layers are substantially the same as reflectances of two RE layers with no ROM layer, it is highly likely that the RE layer serving as a second information recording layer has transmittance of 0% with respect to a wavelength of reproduction light (this is evident from the case of the two-layered RE-BD). It is highly likely that such an optical information recording medium does not allow reproduction light to be condensed and incident to the ROM layer.

In view of the above, it is preferable that a ROM layer to be added is provided in front of two RE layers (i.e. a ROM layer is provided farthest from a substrate among a plurality of information recording layers laminated on the substrate), as in the optical information recording medium of the present invention.

Further, with the arrangement, reflectance of the first information recording layer with respect to the wavelength of the reproduction light is more than 0.4%. For example, in a case of BD, it is possible to reduce intensity of reproduction laser to approximately 3.5mW. Consequently, the optical information recording medium of the present invention does not suffer deterioration of a RE layer when counting the number of information recording layers for the reason mentioned later.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, and reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

With the arrangement, reflectance of the first information recording layer with respect to a wavelength of the reproduction light is such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer. Consequently, when a driving apparatus that not correspond to an additional first information recording layer and that corresponds to second and subsequent information recording layers (driving apparatus corresponding to an old standard; hereinafter old-standardized driving apparatus) reproduces information from the optical information recording medium of the present invention, the old-standardized driving apparatus can hardly detect the first information recording layer.

That is, when counting the number of information recording layers of an optical information recording medium at the initial stage of reproduction, the old-standardized driving apparatus does not emit first reproduction light for reproducing information from the first information recording layer to which the old-standardized driving apparatus does not correspond. Consequently, the old-standardized driving apparatus can hardly detect the first information recording layer of the optical information recording medium of the present invention without changing gain of a S-characteristic detector to a predetermined value.

In contrast thereto, when counting the number of information recording layers of an optical information recording medium at the initial stage of reproduction, a driving apparatus also corresponding to the first information recording layer (hereinafter new-standardized driving apparatus) emits first reproduction light for reproducing information from the first information recording layer to which the new-standardized driving apparatus corresponds. Consequently, the new-standardized driving apparatus can identify the first information recording layer of the optical information recording medium of the present invention without changing gain of a S-characteristic detector to a predetermined value.

Therefore, the optical information recording medium of the present invention allows the old-standardized driving apparatus to reproduce information from the second and subsequent information recording layers without defective reproduction. Further, in a case where the optical information recording medium of the present invention is read by the new-standardized driving apparatus, the optical information recording medium allows the new-standardized driving apparatus to reproduce information from the first information recording layer, allowing an increase in recording capacity of the optical information recording medium by recording capacity corresponding to the first information recording layer.

Further, with the arrangement, reflectance of the first information recording layer with respect to the wavelength of the reproduction light is such a value as not to allow focus pull-in with respect to the second reproduction light for reproducing information from the rewritable layer, and is such a value as to allow focus pull-in with respect to the first reproduction light, with higher intensity than the second reproduction light, for reproducing information from the first information recording layer. The above arrangement also yields the above effect. That is, the optical information recording medium of the present invention can be read also by the old-standardized driving apparatus, and when the optical information recording medium is read by the new-standardized driving apparatus, it is possible to increase recording capacity of the optical information recording medium by recording capacity corresponding to the first information recording layer.

In a case where gain of a S-characteristic detector is not fixed when counting the number of information recording layers of an optical information recording medium in the initial stage of reproduction, a driving apparatus may be equipped with AGC for example. However, since the driving apparatus is in a state before focusing, it is difficult to obtain signal amplitude serving as a reference. Consequently, it is very difficult to detect a S-characteristic of an information recording layer properly other than by the driving apparatus having a predetermined fixed gain.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, and reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

With the arrangement, the first information recording layer has translucency, and reflectance of the first information recording layer with respect to the wavelength of the reproduction light is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the ROM layer is not provided.

Further, the optical information recording medium of the present invention is designed such that the first information recording layer has translucency, and reflectance of the first information recording layer with respect to the wavelength of the reproduction light is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer. Consequently, the optical information recording medium of the present invention allows increasing recording capacity by recording capacity corresponding to the first information recording layer.

The optical information recording medium of the present invention is preferably designed such that a relation represented by

$$0.04 < \frac{(n_0{}^2 + n_1{}^2)(n_1{}^2 + n^2) - 4n_0 n_1{}^2 n + (n_0{}^2 - n_1{}^2)(n_1{}^2 - n^2)\cos(4\pi n_1 d / \lambda)}{(n_0{}^2 + n_1{}^2)(n_1{}^2 + n^2) + 4n_0 n_1{}^2 n + (n_0{}^2 - n_1{}^2)(n_1{}^2 - n^2)\cos(4\pi n_1 d / \lambda)} \le 0.22$$

is met,
where $\lambda$ is the wavelength of the reproduction light, d is a thickness of the first information recording layer, no, $n_1$, and n are refractive indices of the transparent layer, the first information recording layer, and the intermediate layer, respectively.

This is because the reflectance of the first information recording layer with respect to the wavelength of the reproduction light can be represented by the above expression where $\lambda$ is the wavelength of the reproduction light, d is a thickness of the first information recording layer, no, $n_1$, and n are refractive indices of the transparent layer, the first information recording layer, and the intermediate layer, respectively, as described in "Applied Physics Series 3, Thin Films (Applied Physics, Book 3, Thin Films, Kinbara Akira, Fujiwara Hideo, SHOKABO PUBLISHING Co., Ltd. June 20, 1979, p. 198).

With the arrangement, it is possible to specify a structure that provides reflectance of the first information recording layer with respect to the wavelength of the reproduction light.

It is preferable to arrange the optical information recording medium of the present invention such that the first information recording layer is made of a dielectric body whose refractive index is more than 1.75 and not more than 2.06.

In general, it is often that the light-transmitting layer and the intermediate layer are made of resin whose refractive index is approximately 1.5. Further, the thickness of the first information recording layer is preferably approximately 15nm in view of reproduction durability and cost-up caused by the increase in a film formation time due to the increase in film thickness. In consideration of these two limitations required in light of actual production, the refractive index of the first information recording layer is calculated, from the equation, as being more than 1.75 and not more than 2.06.

It is preferable to arrange the optical information recording medium of the present invention such that the dielectric body is made of silicon nitride or mainly made of silicon nitride. Further, it is preferable to arrange the optical information recording medium of the present invention such that the dielectric body is made of aluminum nitride or mainly made of aluminum nitride. The dielectric body is not limited to these as long as the dielectric body has transparency and allows the reflectance of the first information recording layer with respect to the wavelength of the reproduction light to be within the above range.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

With the arrangement, the reflectance of the first information recording layer with respect to the wavelength of the reproduction light is 2.2% or less. Consequently, for the reason explained later, the first information recording layer does not allow focus pull-in with respect to second reproduction light for reproducing information from the rewritable layer and allows focus pull-in with respect to first reproduction light, with higher intensity than the second reproduction light, for reproducing information from the first information recording layer.

Specifically, the optical information recording medium of the present invention is designed such that the first information recording layer closest to the plane where the reproduction light is incident out of the plurality of information recording layers is a layer where information is additionally recordable (R layer) or a layer where information is additionally recordable and information is reproducible and at least one layer other than the first information recording layer out of the plurality of information recording layers is a rewritable layer including a region where information is rewritable (RE layer) and the first information recording layer has translucency. Consequently, an optical information recording medium including two RE layers, which is conventionally difficult to include three or more layers, can be arranged to additionally include a R layer while hardly dropping return light ratios of the two RE layers. This allows increasing recording capacity of the optical information recording medium including the RE layers. Having translucency with respect to a wavelength of reproduction light indicates having transmittance of 80% or more with respect to the wavelength of the reproduction light. The focus pull-in indicates a state where focus servo is ON (i.e. state where focus position of laser light emitted from an optics system follows any information recording layer).

In a conventional hybrid optical information recording medium in which recording capacity is increased by additionally providing a R layer serving as a first information recording layer, the first information recording layer is required to transmit reflective light from a second information recording layer and subsequent information recording layer (referred to as other information recording layer) that are RE layers whose material results in low reflectance (reflectance of approximately 15% with respect to a wavelength of reproduction light of approximately 405nm). Therefore, in a case where the R layer has a normal two-layered structure in which organic dye and a reflective film are combined, the R layer made of a metal such as Ag, A1, and Au is made thin in order to have high transmittance.

However, since the reflective layer is a metal layer, even when the reflective layer is made as thin as possible provided that the metal layer is evenly formed, the reflective layer still has reflectance of approximately 8% that is higher than reflectance of 5% of a first information recording layer of a two-layered RE-BD for example. Consequently, when emitting reproduction light to the R layer, a S-characteristic sufficient for focus pull-in is detected from the R layer. Accordingly, a driving apparatus that does not correspond to the standard of the hybrid optical information recording medium is highly likely to detect the S-characteristic from the R layer. Consequently, it is highly likely that the driving apparatus cannot deal with an information recording layer unknown to the driving apparatus, resulting in defective reproduction.

In contrast thereto, the optical information recording medium of the present invention is designed such that the first information recording layer has translucency, and reflectance of the first information recording layer with respect to the wavelength of the reproduction light is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the R layer is not provided.

Further, the optical information recording medium of the present invention is designed such that the first information recording layer has translucency, and reflectance of the first information recording layer with respect to the wavelength of the reproduction light is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer, and can reproduce information from the first information recording layer. Consequently, the optical information recording medium of the present invention allows increasing recording capacity by recording capacity corresponding to the first information recording layer.

In particular, since an optical information recording medium including two RE layers, which is conventionally difficult to include three or more layers, can be arranged to additionally include a R layer, it is possible to increase recording capacity of the optical information recording medium while keeping limit value of each rewritable layer.

In a case where the optical information recording medium including two RE layers, which is conventionally difficult to include three or more layers, is arranged to additionally include a R layer, if the R layer is provided at a position different from that of the optical information recording medium of the present invention, a problem occurs. The reason is explained below.

Initially, in a case of an optical information recording medium in which a R layer is provided between two RE layers, it is necessary to provide the R layer at a position that does not cause interlayer crosstalk (noise from an information recording layer other than an information recording layer during reproduction) among three information recording layers. Consequently, providing the R layer broadens the distance between the two RE layers, with the result that an optical head of a driving apparatus corresponding to an old standard cannot reproduce information from such an optical information recording medium.

In general, an objective lens of an optical head is designed such that the objective lens focuses on a position with a predetermined distance from a reproduction-light-incident plane that is a surface of an optical information recording medium. In a case of a multi-layered optical information recording medium, the distances between the reproduction-light-incident plane and individual information recording layers are different. In this case, spherical aberration occurs at an information recording layer positioned with an optimal distance from the reproduction-light-incident plane, resulting in adverse influence on a reproduction signal in a driving apparatus. In order to cancel the spherical aberration, the driving apparatus is equipped with a beam expander for example.

However, in order to increase the range of the beam expander, it is necessary to provide an objective lens that meets a sine condition more satisfactory. Such an objective lens requires very strict conditions of common differences such as decentering error and inclination error, and therefore the objective lens gets expensive. Consequently, an optical head gets expensive. Therefore, it is often that a driving apparatus corresponding to an old-standardized optical information recording medium with no R layer does not include an optical head having a beam expander capable of dealing with a case where two RE layers have a large distance therebetween. Accordingly, it is highly possible that the driving apparatus corresponding to the old standard cannot reproduce information from each of the two RE layers.

Next, in a case of an optical information recording medium in which a R layer is provided behind two RE layers (i.e. a R layer is provided at a position closest to a substrate), if reflectances of the two RE layers are substantially the same as reflectances of two RE layers with no R layer, it is highly likely that the RE layer serving as a second information recording layer has transmittance of 0% with respect to a wavelength of reproduction light (this is evident from the case of the two-layered RE-BD). It is highly likely that such an optical information recording medium does not allow reproduction light to be condensed and incident to the R layer.

In view of the above, it is preferable that a R layer to be added is provided in front of two RE layers (i.e. a R layer is provided farthest from a substrate among a plurality of information recording layers laminated on the substrate), as in the optical information recording medium of the present invention.

Further, with the arrangement, reflectance of the first information recording layer with respect to the wavelength of the reproduction light is more than 0.4%. For example, in a case of BD, it is possible to reduce intensity of reproduction laser to approximately 3.5mW. Consequently, the optical information recording medium of the present invention does not suffer deterioration of a RE layer when counting the number of information recording layers for the reason mentioned later.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including first information recording layer which is provided closest to a plane where the reproduction light is incident and which allows only additional recording of information or which includes a region allowing only additional recording of information and a region allowing only reproduction of information, and at least one rewritable layer including a region where information is rewritable, and reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

With the arrangement, reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer. Consequently, when a driving apparatus that not correspond to an additional first information recording layer and that corresponds to second and subsequent information recording layers (driving apparatus corresponding to an old standard; hereinafter old-standardized driving apparatus) reproduces information from the optical information recording medium of the present invention, the old-standardized driving apparatus can hardly detect the first information recording layer.

That is, when counting the number of information recording layers of an optical information recording medium at the initial stage of reproduction, the old-standardized driving apparatus does not emit first reproduction light for reproducing information from the first information recording layer to which the old-standardized driving apparatus does not correspond. Consequently, the old-standardized driving apparatus can hardly detect the first information recording layer of the optical information recording medium of the present invention without changing gain of a S-characteristic detector to a predetermined value.

In contrast thereto, when counting the number of information recording layers of an optical information recording medium at the initial stage of reproduction, a driving apparatus also corresponding to the first information recording layer (hereinafter new-standardized driving apparatus) emits first reproduction light for reproducing information from the first information recording layer to which the new-standardized driving apparatus corresponds. Consequently, the new-standardized driving apparatus can identify the first information recording layer of the optical information recording medium of the present invention without changing gain of a S-characteristic detector to a predetermined value.

Therefore, the optical information recording medium of the present invention allows the old-standardized driving apparatus to reproduce information from the second and subsequent information recording layers without defective reproduction. Further, in a case where the optical information recording medium of the present invention is read by the new-standardized driving apparatus, the optical information recording medium allows the new-standardized driving apparatus to reproduce information from the first information recording layer, allowing an increase in recording capacity of the optical information recording medium by recording capacity corresponding to the first information recording layer.

Further, with the arrangement, reflectance of the first information recording layer with respect to the wavelength of the reproduction light is such a value as not to allow focus pull-in with respect to the second reproduction light for reproducing information from the rewritable layer, and is such a value as to allow focus pull-in with respect to the first reproduction light, with higher intensity than the second reproduction light, for reproducing information from the first information recording layer. The above arrangement also yields the above effect. That is, the optical information recording medium of the present invention can be read also by the old-standardized driving apparatus, and when the optical information recording medium is read by the new-standardized driving apparatus, it is possible to increase recording capacity of the optical information recording medium by recording capacity corresponding to the first information recording layer.

In a case where gain of a S-characteristic detector is not fixed when counting the number of information recording layers of an optical information recording medium in the initial stage of reproduction, a driving apparatus may be equipped with AGC for example. However, since the driving apparatus is in a state before focusing, it is difficult to obtain signal amplitude serving as a reference. Consequently, it is very difficult to detect a S-characteristic of an information recording layer properly other than by the driving apparatus having a predetermined fixed gain.

In order to solve the foregoing problems, an optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, and reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

With the arrangement, the first information recording layer has translucency, and reflectance of the first information recording layer with respect to the wavelength of the reproduction light is such a value as not to allow focus pull-in with respect to second reproduction light for reproducing information from the rewritable layer. Since a driving apparatus that does not correspond to the additionally provided first information recording layer and that corresponds to the second information recording layer and the subsequent information recording layer (i.e. driving apparatus corresponding to old standard) emits the reproduction light for reproducing information from the rewritable layer, the driving apparatus can surely focus on the second information recording layer and the subsequent information recording layer. Accordingly, the driving apparatus corresponding to the old standard is not required to correspond to an unknown information recording layer, and does not suffer defective reproduction. That is, the optical information recording medium of the present invention can be read also by the driving apparatus corresponding to the old standard.

In a case where the first information recording layer has high translucency, the first information recording layer hardly prevents light from being incident to the second information recording layer and the subsequent information recording layer, and therefore intensity of light for recording may be substantially the same as intensity of light in a case where the R layer is not provided.

Further, the optical information recording medium of the present invention is designed such that the first information recording layer has translucency, and reflectance of the first information recording layer with respect to the wavelength of the reproduction light is such a value as to allow focus pull-in with respect to first reproduction light, with higher intensity than the second reproduction light, for reproducing information from the first information recording layer. Consequently, a driving apparatus corresponding to the first information recording layer can focus on the first information recording layer by emitting the first reproduction light, with higher intensity than the second reproduction light, for reproducing information from the first information recording layer, to the first information recording layer. Consequently, the optical information recording medium of the present invention allows increasing recording capacity by recording capacity corresponding to the first information recording layer.

The optical information recording medium of the present invention is preferably designed such that a relation represented by

$$0.04 < \frac{(n_0^{\,2} + n_1^{\,2})(n_1^{\,2} + n^2) - 4n_0 n_1^{\,2} n + (n_0^{\,2} - n_1^{\,2})(n_1^{\,2} - n^2)\cos(4\pi n_1 d / \lambda)}{(n_0^{\,2} + n_1^{\,2})(n_1^{\,2} + n^2) + 4n_0 n_1^{\,2} n + (n_0^{\,2} - n_1^{\,2})(n_1^{\,2} - n^2)\cos(4\pi n_1 d / \lambda)} \le 0.22$$

is met,

where $\lambda$ is the wavelength of the reproduction light, d is a thickness of the first information recording layer, no, $n_1$, and n are refractive indices of the transparent layer, the first information recording layer, and the intermediate layer, respectively.

This is because the reflectance of the first information recording layer with respect to the wavelength of the reproduction light can be represented by the above expression where $\lambda$ is the wavelength of the reproduction light, d is a thickness of the first information recording layer, no, $n_1$, and n are refractive indices of the transparent layer, the first information recording layer, and the intermediate layer, respectively, as described in (Applied Physics, Book 3, Thin Films, Kinbara Akira, Fujiwara Hideo, SHOKABO PUBLISHING Co., Ltd. June 20, 1979, p. 198).

With the arrangement, it is possible to specify a structure that provides reflectance of the first information recording layer with respect to the wavelength of the reproduction light.

It is preferable to arrange the optical information recording medium of the present invention such that the first information recording layer is made of a dielectric body whose refractive index is more than 1.75 and not more than 2.06.

In general, it is often that the light-transmitting layer and the intermediate layer are made of resin whose refractive index is approximately 1.5. Further, the thickness of the first information recording layer is preferably approximately 15nm in view of reproduction durability and cost-up caused by the increase in a film formation time due to the increase in film thickness. In consideration of these two limitations required in light of actual production, the refractive index of the first information recording layer is calculated, from the equation, as being more than 1.75 and not more than 2.06.

It is preferable to arrange the optical information recording medium of the present invention such that the dielectric body is made of bismuth oxide and germanium oxide, or mainly made of bismuth oxide and germanium oxide. The dielectric body is not limited to these as long as the dielectric body has translucency and allows the reflectance of the first information recording layer with respect to the wavelength of the reproduction light to be within the above range.

Further, an optical information recording medium driving apparatus of the present invention is capable of reproducing information from an optical information recording medium, the optical information recording medium including: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information or only additional recording of information or which includes a region allowing only additional recording of information and a region allowing only reproduction of information, and at least one rewritable layer including a region where information is rewritable, intensity of reproduction light for reproducing information from the first information recording layer being larger than intensity of reproduction light for reproducing information from the rewritable layer, and being small enough not to deteriorate the rewritable layer.

With the arrangement, intensity of the reproduction light for reproducing information from the first information recording layer is larger than intensity of the reproduction light for reproducing information from the rewritable layer. Consequently, the optical information recording medium driving apparatus of the present invention can surely focus on the first information recording layer of the optical information recording medium of the present invention which is also readable by the driving apparatus corresponding to the old standard, and accordingly the optical information recording medium driving apparatus can reproduce information from the first information recording layer.

As described above, the optical information recording medium of the present invention includes: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

An optical information recording medium, comprising: a substrate; a plurality of information recording layers provided on the substrate, information being reproducible from each of the plurality of information recording layers by emission of reproduction light to the plurality of information recording layers; an intermediate layer for separating the plurality of information recording layers; and a light transmitting layer provided farthest from the substrate, the plurality of information recording layers including a first information recording layer which is provided closest to a plane where the reproduction light is incident and which allows only additional recording of information or which includes a region allowing only additional recording of information and a region allowing only reproduction of information, and at least one rewritable layer including a region where information is rewritable, the first information recording layer being transparent, and reflectance of the first information recording layer with respect to a wavelength of the reproduction light being in a range of more than 0.4% and not more than 2.2%.

Therefore, the optical information recording medium of the present invention yields an effect of increasing recording capacity thereof while maintaining the limit value of recording capacity of a rewritable layer, and at the same time being universally applicable to a driving apparatus corresponding to an old standardized optical information recording medium having fewer number of information recording layers.

Industrial Applicability

The optical information recording medium of the present invention is applicable to optical information recording media including optical scan discs such as CDs, DVDs, HD-DVDs, and BDs, optical magneto discs, and phase change discs, and to optical information recording medium driving apparatuses.

**Claims**

1. An optical information recording medium, comprising:

   a substrate;
   a plurality of information recording layers provided on the substrate, information being reproducible from each of the plurality of information recording layers by emission of reproduction light to the plurality of information recording layers;
   an intermediate layer for separating the plurality of information recording layers; and
   a light transmitting layer provided farthest from the substrate,
   the plurality of information recording layers including

      a first information recording layer which is provided closest to a plane where the reproduction light is incident and which allows only reproduction of information, and
      at least one rewritable layer including a region where information is rewritable,

   the first information recording layer being transparent, and
   reflectance of the first information recording layer with respect to a wavelength of the reproduction light being in a range of more than 0.4% and not more than 2.2%.

2. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only reproduction of information, and
at least one rewritable layer including a region where information is rewritable,

the first information recording layer being transparent,
reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

3. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only reproduction of information, and
at least one rewritable layer including a region where information is rewritable, and

reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and
such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

4. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only reproduction of information, and
at least one rewritable layer including a region where information is rewritable,

the first information recording layer being transparent, and
reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

5. The optical information recording medium as set forth in claim 1 or 2, wherein a relation represented by

$$0.04 < \frac{(n_0{}^2 + n_1{}^2)(n_1{}^2 + n^2) - 4n_0 n_1{}^2 n + (n_0{}^2 - n_1{}^2)(n_1{}^2 - n^2)\cos(4\pi n_1 d / \lambda)}{(n_0{}^2 + n_1{}^2)(n_1{}^2 + n^2) + 4n_0 n_1{}^2 n + (n_0{}^2 - n_1{}^2)(n_1{}^2 - n^2)\cos(4\pi n_1 d / \lambda)} \leq 0.22$$

is met,
where $\lambda$ is the wavelength of the reproduction light, d is a thickness of the first information recording layer, no, $n_1$, and n are refractive indices of the transparent layer, the first information recording layer, and the intermediate layer, respectively.

6. The optical information recording medium as set forth in any one of claims 1-5, wherein the first information recording layer is made of a dielectric body whose refractive index is more than 1.75 and not more than 2.06.

7. The optical information recording medium as set forth in claim 6, wherein the dielectric body is made of silicon nitride or mainly made of silicon nitride.

8. The optical information recording medium as set forth in claim 6, wherein the dielectric body is made of aluminum nitride or mainly made of aluminum nitride.

9. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only additional recording of information or which includes a region allowing only additional recording of information and a region allowing only reproduction of information, and
at least one rewritable layer including a region where information is rewritable,

the first information recording layer being transparent, and
reflectance of the first information recording layer with respect to a wavelength of the reproduction light being in a range of more than 0.4% and not more than 2.2%.

10. An optical information recording medium, comprising:

a substrate;
a plurality of information recording layers provided on the substrate, information being reproducible from each of the plurality of information recording layers by emission of reproduction light to the plurality of information recording layers;

an intermediate layer for separating the plurality of information recording layers; and
a light transmitting layer provided farthest from the substrate,
the plurality of information recording layers including

a first information recording layer which is provided closest to a plane where the reproduction light is incident and which allows only additional recording of information or which includes a region allowing only additional recording of information and a region allowing only reproduction of information, and
at least one rewritable layer including a region where information is rewritable,

the first information recording layer being transparent,
reflectance of the first information recording layer with respect to a wavelength of the reproduction light being smaller than a ratio of light returning from the rewritable layer, and being large enough to allow the first information recording layer to be focused on when first reproduction light for reproducing information from the first information recording layer, with higher intensity than second reproduction light for reproducing information from the rewritable layer, is emitted to the first information recording layer.

11. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only additional recording of information or which includes a region allowing only additional recording of information and a region allowing only reproduction of information, and
at least one rewritable layer including a region where information is rewritable, and

reflectance of the first information recording layer with respect to a wavelength of the reproduction light being such a value as to cause a S-characteristic of the first information recording layer obtained when second reproduction light for reproducing information from the rewritable layer is emitted to the first information recording layer to be so smaller than a S-characteristic of the rewritable layer obtained when the second reproduction light is emitted to the rewritable layer that it is necessary to change gain of a S-characteristic-detector in order to detect the S-characteristic of the first information recording layer, and
such a value as to cause a S-characteristic of the first information recording layer obtained when first reproduction light for reproducing information from the first information recording layer, with higher intensity than the second reproduction light, is emitted to the first information recording layer to exhibit a same value as the S-characteristic of the rewritable layer obtained when the second reproduction light is emitted to the rewritable layer.

12. An optical information recording medium, comprising:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only additional recording of information or which includes a region allowing only additional recording of information and a region allowing only reproduction of information, and
at least one rewritable layer including a region where information is rewritable,

the first information recording layer being transparent, and

reflectance of the first information recording layer with respect to a wavelength of the reproduction light being such a value as not to allow focus pull-in with respect to second reproduction light for reproducing information from the rewritable layer and to allow focus pull-in with respect to first reproduction light, with higher intensity than the second reproduction light, for reproducing information from the first information recording layer.

13. The optical information recording medium as set forth in claim 9 or 10, wherein a relation represented by

$$0.04 < \frac{(n_0{}^2 + n_1{}^2)(n_1{}^2 + n^2) - 4n_0 n_1{}^2 n + (n_0{}^2 - n_1{}^2)(n_1{}^2 - n^2)\cos(4\pi n_1 d / \lambda)}{(n_0{}^2 + n_1{}^2)(n_1{}^2 + n^2) + 4n_0 n_1{}^2 n + (n_0{}^2 - n_1{}^2)(n_1{}^2 - n^2)\cos(4\pi n_1 d / \lambda)} \leq 0.22$$

is met,
where $\lambda$ is the wavelength of the reproduction light, d is a thickness of the first information recording layer, no, $n_1$, and n are refractive indices of the transparent layer, the first information recording layer, and the intermediate layer, respectively.

14. The optical information recording medium as set forth in any one of claims 9-13, wherein the first information recording layer is made of a dielectric body whose refractive index is more than 1.75 and not more than 2.06.

15. The optical information recording medium as set forth in claim 14, wherein the dielectric body is made of bismuth oxide and germanium oxide, or mainly made of bismuth oxide and germanium oxide.

16. An optical information recording medium driving apparatus, capable of reproducing information from an optical information recording medium,
the optical information recording medium including:

a substrate;
a plurality of information recording layers provided on the substrate, information being reproducible from each of the plurality of information recording layers by emission of reproduction light to the plurality of information recording layers;
an intermediate layer for separating the plurality of information recording layers; and
a light transmitting layer provided farthest from the substrate,
the plurality of information recording layers including

a first information recording layer which is provided closest to a plane where the reproduction light is incident and which allows only reproduction of information or only additional recording of information or which includes a region allowing only additional recording of information and a region allowing only reproduction of information, and
at least one rewritable layer including a region where information is rewritable,

intensity of reproduction light for reproducing information from the first information recording layer being larger than intensity of reproduction light for reproducing information from the rewritable layer, and being small enough not to deteriorate the rewritable layer.

F I G. 1

REPRODUCTION
LIGHT

200

10

20

30

41

42

43

44

45

46

47

40

50

F I G. 2

F I G. 3

REPRODUCTION
LIGHT

202

10

120

30

41
42
43
44
45
46
47

40

50

F I G. 4

(a)

20  40

+V1

0

(b)

120  40

+V1

0

F I G. 5

40

20

+V1

0

F I G. 6

INTENSITY OF REPRODUCTION LASER (mW)

F I G. 7

INTENSITY OF REPRODUCTION LASER (mW)

F I G. 8

F I G. 9

400

50

B

30

C

30

D

30

A

10

REPRODUCTION
LIGHT

F I G.  1 0

F I G.  1 1

(a) POSITION OF OBJECTIVE LENS

LIMIT POSITION

SECOND INFORMATION RECORDING LAYER B

THIRD INFORMATION RECORDING LAYER C

FOURTH INFORMATION RECORDING LAYER D

FIRST INFORMATION RECORDING LAYER A

INITIAL POSITION

(b) FOCUS ERROR SIGNAL

+V0

0

FOCUS SERVO ON

FIG. 12

```
        ╭─────────────╮
        │    START    │
        ╰──────┬──────╯
               │
  ┌────────────┴──────────────────┐
  │ LOAD OPTICAL INFORMATION      │ ⌐S1
  │ RECORDING MEDIUM              │
  │ AND DRIVING MOTOR ROTATES     │
  │ THE MEDIUM                    │
  │ AT PREDETERMINED ROTATION     │
  │ NUMBER                        │
  └────────────┬──────────────────┘
               │
  ┌────────────┴──────────────────┐
  │ MOVE PICKUP TO POSITION       │ ⌐S2
  │ FACING LEAD-IN AREA           │
  │ OF OPTICAL INFORMATION        │
  │ RECORDING MEDIUM              │
  │ AND CARRY OUT FOCUS SEARCHING │
  │ PROCESS                       │
  │ ON TARGET LAYER               │
  └────────────┬──────────────────┘
               │
  ┌────────────┴──────────────────┐
  │      TRACKING PROCESS         │ ⌐S3
  └────────────┬──────────────────┘
               │
  ┌────────────┴──────────────────┐
  │ INFORMATION REPRODUCING       │ ⌐S4
  │ PROCESS                       │
  └────────────┬──────────────────┘
               │
        ╭──────┴──────╮
        │     END     │
        ╰─────────────╯
```

F I G. 1 3

REPRODUCTION
LIGHT

300

—10

—70

—30

—41
—42
—43
—44
—45
—46
—47

40

—50

F I G. 1 4

REPRODUCTION
LIGHT

301

10

70

30

{ 61
62
63
64
65
66 } 60

30

{ 41
42
43
44
45
46
47 } 40

50

FIG. 15

F I G. 1 6

REPRODUCTION
LIGHT

500

—10

81
82
83
84
85
86

80

—30

41
42
43
44
45
46
47

40

—50

## INTERNATIONAL SEARCH REPORT

| International application No. |
| --- |
| PCT/JP2008/062361 |

A.  CLASSIFICATION OF SUBJECT MATTER
*G11B7/24*(2006.01)i, *G11B7/007*(2006.01)i, *G11B7/085*(2006.01)i, *G11B7/09*
(2006.01)i, *G11B7/258*(2006.01)i

According to International Patent Classification (IPC) or to both national classification and IPC

B.  FIELDS SEARCHED

Minimum documentation searched (classification system followed by classification symbols)
G11B7/24, G11B7/007, G11B7/085, G11B7/09, G11B7/258

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y<br><br>A | JP 2006-196035 A  (Fuji Photo Film Co., Ltd.),<br>27 July, 2006 (27.07.06),<br>Claims; Par. No. [0016]<br>(Family: none) | 16<br>1-2,5-10,<br>13-15<br>3-4,11-12 |
| X<br>Y<br><br>A | JP 2002-304730 A  (Hitachi, Ltd.),<br>18 October, 2002 (18.10.02),<br>Claims<br>(Family: none) | 16<br>1-2,5-10,<br>13-15<br>3-4,11-12 |
| X<br>Y<br>A | WO 2006/003666 A2  (LEVICH, Eugen),<br>12 January, 2006 (12.01.06),<br>Page 12<br>& JP 2008-507067 A      & US 2008/0038455 A<br>& EP 1774522 A          & CN 101053029 A | 16<br>1,5-9,13-15<br>2-4,10-12 |

☒  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 October, 2008 (07.10.08) | Date of mailing of the international search report<br>    28 October, 2008 (28.10.08) |
| --- | --- |
| Name and mailing address of the ISA/<br>    Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/062361

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br><br>A | WO 2006/118164 A1  (Matsushita Electric<br>Industrial Co., Ltd.),<br>09 November, 2006 (09.11.06),<br>Par. No. [0022]<br>(Family: none) | 16<br>2,5-8,10,<br>13-15<br>1,3-4,9,<br>11-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000207774 A
- JP 10188294 A
- JP 2006511010A PCT

**Non-patent literature cited in the description**

- **Kinbara Akira.** Applied Physics, Book 3, Thin Films. Fujiwara Hideo, SHOKABO PUBLISHING Co., Ltd, 20 June 1979, 198